(19) Europäisches Patentamt
European Patent Office
Office européen des brevets

(11) **EP 3 942 098 B1**

(12) **EUROPÄISCHE PATENTSCHRIFT**

(45) Veröffentlichungstag und Bekanntmachung des Hinweises auf die Patenterteilung:
**16.04.2025 Patentblatt 2025/16**

(21) Anmeldenummer: **20730610.1**

(22) Anmeldetag: **03.06.2020**

(51) Internationale Patentklassifikation (IPC):
***D01D 1/02*** *(2006.01)* ***D01F 9/22*** *(2006.01)*
***B01D 53/02*** *(2006.01)* ***B01J 20/20*** *(2006.01)*
***B01J 20/28*** *(2006.01)*

(52) Gemeinsame Patentklassifikation (CPC):
**D01F 9/22; B01D 53/02; B01J 20/205; B01J 20/28023; B01J 20/28038; B01J 20/28069; B01J 20/2808; D01D 1/02;** B01D 2253/102; B01D 2253/308; B01D 2253/31; B01D 2253/311; B01D 2253/34; B01D 2256/245; B01D 2257/406;
(Forts.)

(86) Internationale Anmeldenummer:
**PCT/EP2020/065373**

(87) Internationale Veröffentlichungsnummer:
**WO 2020/249441 (17.12.2020 Gazette 2020/51)**

(54) **HERSTELLUNGSVERFAHREN FÜR KOHLENSTOFFFASERMATERIAL ZUR ABTRENNUNG VON NH 3 AUS GASGEMISCHEN UND DIE VERWENDUNG EINES SOLCHEN KOHLENSTOFFFASERMATERIALS**

PRODUCTION METHOD FOR CARBON FIBRE MATERIAL FOR SEPARATING NH3 FROM GAS MIXTURES, AND THE USE OF THIS CARBON FIBRE MATERIAL

PROCÉDÉ DE FABRICATION D’UN MATÉRIAU À BASE DE FIBRES DE CARBONE POUR LA SÉPARATION DE NH3 À PARTIR DE MÉLANGES GAZEUX, ET L’UTILISATION DE CE MATÉRIAU À BASE DE FIBRES DE CARBONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2019 DE 102019208643**

(43) Veröffentlichungstag der Anmeldung:
**26.01.2022 Patentblatt 2022/04**

(73) Patentinhaber: **Forschungszentrum Jülich GmbH**
**52428 Jülich (DE)**

(72) Erfinder:
- **TEMPEL, Hermann**
  **52372 Kreuzau (DE)**
- **KRETZSCHMAR, Ansgar Karl Georg**
  **52062 Aachen (DE)**
- **SELMERT, Victor Octavian**
  **52070 Aachen (DE)**
- **WEINRICH, Henning**
  **52428 Jülich (DE)**
- **KUNGL, Hans**
  **69118 Heidelberg (DE)**
- **EICHEL, Rüdiger-A.**
  **52428 Jülich (DE)**

(74) Vertreter: **Gille Hrabal Partnerschaftsgesellschaft mbB**
**Patentanwälte**
**Brucknerstraße 20**
**40593 Düsseldorf (DE)**

(56) Entgegenhaltungen:
**CN-A- 107 051 382**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 942 098 B1

- **SINGH G ET AL: "Removal of disinfection byproducts from water by carbonized electrospun nanofibrous membranes", SEPARATION AND PURIFICATION TECHNOLOGY, ELSEVIER SCIENCE, AMSTERDAM, NL, vol. 74, no. 2, 17 August 2010 (2010-08-17), pages 202 - 212, XP027174730, ISSN: 1383-5866, [retrieved on 20100611]**
- **ZHANG L ET AL: "Carbon nanofibers with nanoporosity and hollow channels from binary polyacrylonitrile systems", EUROPEAN POLYMER JOURNAL, PERGAMON PRESS LTD. OXFORD, GB, vol. 45, no. 1, 1 January 2009 (2009-01-01), pages 47 - 56, XP025869133, ISSN: 0014-3057, [retrieved on 20081010], DOI: 10.1016/ J.EURPOLYMJ.2008.09.035**
- **HUNG-YI HSIAO ET AL: "Preparation of high-surface-area PAN-based activated carbon by solution-blowing process for COadsorption", SEPARATION AND PURIFICATION TECHNOLOGY, ELSEVIER SCIENCE, AMSTERDAM, NL, vol. 82, 4 August 2011 (2011-08-04), pages 19 - 27, XP028312088, ISSN: 1383-5866, [retrieved on 20110812], DOI: 10.1016/ J.SEPPUR.2011.08.006**
- **DONG WOO KIM ET AL: "Evaluation of CO 2 adsorption capacity of electrospun carbon fibers with thermal and chemical activation", JOURNAL OF APPLIED POLYMER SCIENCE, vol. 134, no. 47, 15 December 2017 (2017-12-15), US, pages 45534, XP055727644, ISSN: 0021-8995, DOI: 10.1002/app.45534**
- **SALVADOR F ET AL: "Mechanism of heterogeneous adsorption in the storage of hydrogen in carbon fibers activated with supercritical water and steam", INTERNATIONAL JOURNAL OF HYDROGEN ENERGY, ELSEVIER SCIENCE PUBLISHERS B.V., BARKING, GB, vol. 36, no. 13, 14 March 2011 (2011-03-14), pages 7567 - 7579, XP028094617, ISSN: 0360-3199, [retrieved on 20110319], DOI: 10.1016/ J.IJHYDENE.2011.03.079**
- **IM J S ET AL: "Hydrogen storage evaluation based on investigations of the catalytic properties of metal/metal oxides in electrospun carbon fibers", INTERNATIONAL JOURNAL OF HYDROGEN ENERGY, ELSEVIER SCIENCE PUBLISHERS B.V., BARKING, GB, vol. 34, no. 8, 1 May 2009 (2009-05-01), pages 3382 - 3388, XP026050009, ISSN: 0360-3199, [retrieved on 20090313], DOI: 10.1016/ J.IJHYDENE.2009.02.047**


(52) Gemeinsame Patentklassifikation (CPC): (Forts.)
B01D 2257/504; B01D 2258/01; B01D 2258/05; B01D 2258/06; Y02C 20/20; Y02C 20/40; Y02P 70/62

## Beschreibung

Die vorliegende Erfindung betrifft ein Verfahren zur Herstellung eines Kohlenstofffasermaterials zur Abtrennung von $NH_3$ aus Gasgemischen, und die Verwendung eines durch das Verfahren erhältliches Kohlenstofffasermaterials zur Abtrennung von $NH_3$ aus Gasgemischen

## Hintergrund der Erfindung

Gegenwärtig ist die globale Klimaerwärmung eines der größten Umweltprobleme.

Aufgrund der zur Energiegewinnung sehr verbreiteten Verbrennung fossiler Brennstoffe sowie der intensiven Landwirtschaft steigt der Anteil an $CO_2$ in der Atmosphäre kontinuierlich stark an, was zu Problemen wie Treibhauseffekt, Abschmelzen von Poleiskappen und Gletschern sowie Ansteigen des Meeresspiegels führt. Auch in Roherdgas und Biogas sind z.T. große Anteile $CO_2$ enthalten, die vor der Einspeisung in das Erdgasnetz bzw. der Nutzung als Energiequelle abgetrennt werden müssen.

Es wird daher intensiv an der Entwicklung von Technologien zur Entfernung von $CO_2$ aus Abgasen wie z.B. Kraftwerks- oder Industrieabgasen oder aus der Atmosphäre gearbeitet, um diese negativen Umwelteffekte zu vermeiden. Das so gewonnene $CO_2$ kann entweder unterirdisch oder untermeerisch gespeichert werden (sogenannte CCS-Technologie (carbon capture and storage), oder es kann zu Grundstoffen für die industrielle Verwendung wie beispielsweise Synthesegas ($CO/H_2$), Methan oder Ethylen weiterverarbeitet werden.

Zur $CO_2$-Abscheidung aus Abgasen sind mehrere Verfahren bekannt, insbesondere die sogenannte Post-Combustion-Capture, d.h. ein Waschverfahren (der Rauchgasentschwefelung nachgeschaltet) mit einer Hydrogencarbonatlösung (Carbonatwäsche), einer Aminlösung (Aminwäsche), Methanol oder anderen Substanzen, die $CO_2$ binden können. Weiter ist das sogenannte Oxyfuel-Verfahren bekannt, bei dem die eigentliche Verbrennung mit reinem Sauerstoff statt Luft durchgeführt wird und hochdosiertes $CO_2$ zugesetzt wird, um die Verbrennungstemperatur nicht zu hoch ansteigen zu lassen. Das Rauchgas besteht dann hauptsächlich aus $CO_2$ und Wasserdampf, der durch Kondensation leicht entfernt werden kann, so dass $CO_2$ einigermaßen rein gewonnen und in den Prozess zurückgeführt werden kann.

Weiter sind bereits $CO_2$-Abscheidungstechnologien unter Verwendung von Aktivmaterialien bekannt, an denen $CO_2$ selektiv adsorbiert wird. Zum einen handelt es sich um sog. Pressure Swing Adsorptionsverfahren (Druckwechseladsorptionsverfahren), zum anderen um Membrantechnologieverfahren. Auch eine Kryodestillationstechnologie wird bekanntermaßen zur Abtrennung von $CO_2$ aus Gasgemischen angewendet.

An der Abtrennung von Ammoniak ($NH_3$) aus Gasgemischen besteht ebenfalls ein erhöhtes Interesse, u.a. weil Ammoniak zur Energiegewinnung in AmmoniakBrennstoffzellen eingesetzt werden kann. Ammoniak findet sich - gebunden als Ammonium - in großen Mengen in Produktionsabwässern, kommunalen Abwässern oder Gärresten, die bis dato ungenutzt verloren gehen und die Gewässer belasten. Es werden daher zur Zeit bereits Membrandestillationsverfahren zur Gewinnung von Ammoniak aus Gasen für Ammoniakbrennstoffzellen entwickelt (z.B. Projekt "Ammonia-to-Power", AEEE). Ein solches Trennverfahren wäre vorteilhaft zur Nachbehandlung von ammoniakhaltigen Syntheseabgasen oder zur Nachbehandlung von Ammoniakbrennstoffzellen oder Elektrolyseuren, in denen Ammoniak erzeugt wird (z.B. Projekt "Power-to-Ammonia" der RWTH Aachen in Zusammenarbeit mit der Anmelderin).

Beim Pressure Swing Adsorptionsverfahren (Druckwechseladsorptionsverfahren) kommen spezielle poröse Materialien (z. B. Zeolithe, Aktivkohle) als Adsorbens zum Einsatz. Die Trennwirkung kann auf zwei verschiedenen Prinzipien beruhen: der Trennung aufgrund der Gleichgewichtsadsorption oder der Trennung aufgrund der Molekularsiebwirkung. Im ersten Fall wird eine der zu trennenden Komponenten stärker adsorbiert als eine andere, dadurch findet eine Anreicherung der schlechter adsorbierten Komponente in der Gasphase statt. Im zweiten Fall durchdringen bestimmte Moleküle schneller die poröse Struktur des Adsorbens. Wird das Adsorbens nun in einem Reaktorbett vom Gasgemisch durchströmt, so benötigt die Komponente, die schlechter in die Poren eindringt, weniger Zeit um vorbeizuströmen, gelangt also eher zum Ausgang des Reaktorbetts. Das Gas wird unter erhöhtem Druck (meist 6 bar bis 10 bar) in einen Festbettreaktor, der mit dem Adsorbens gefüllt ist, eingeleitet, so dass dieses durchströmt wird. Eine oder mehrere Komponenten des Gemisches (diese werden als "schwere Komponenten" bezeichnet) werden nun adsorbiert. Am Ausgang des Betts kann die sogenannte "leichte Komponente" in aufkonzentrierter Form entnommen werden. Nach einer Weile ist das Adsorberbett weitestgehend gesättigt, und es tritt ein Teil der schweren Komponente mit aus. In diesem Moment wird über Ventile der Prozess so umgeschaltet, dass der Ausgang für die leichte Komponente geschlossen und ein Auslass für die schwere Komponente geöffnet wird. Dies ist begleitet von einer Druckabsenkung. Bei dem niedrigen Druck wird nun das adsorbierte Gas wieder desorbiert und kann am Auslass gewonnen werden. Zwei wechselseitig be- und entladene Adsorber ermöglichen dabei einen kontinuierlichen Betrieb. Um den Überstand an desorbierter schwerer Komponente aus dem Adsorberbett auszutreiben, wird mit einem Anteil des gewünschten Produktes nachgespült, um Verunreinigungen zu vermeiden. Die genaue Einregelung der Umschaltzeitpunkte erfolgt nach der gewünschten Reinheit der Gase. Deren Erhöhung bei einer Komponente erfolgt dabei stets auf Kosten ihrer gewinnbaren Menge und der

Reinheit der anderen Komponente. Die Druckwechsel-Adsorption kommt dann zum Einsatz, wenn die Desorptionsenergie gering und die Konzentration hoch ist. So wird sie zur Zerlegung von Luft zur Gewinnung von $N_2$ (>99,9 %), $O_2$ (<97 %) oder Argon sowie Gewinnung/Reinigung von Wasserstoff z. B. für Brennstoffzellen angewendet. Eine weitere Anwendung ist das Entfernen von $CO_2$ aus Biogas oder die Entfernung von Wasser aus Druckluft.

Die Membrantechnologie wird als energieeffiziente Alternative zur Trennung zahlreicher Gase und Lösungsmittelmischungen angesehen. Spezifische Beispiele beinhalten die Trennung von Wasserstoff aus der Vergasung und Trennung von Kohlenwasserstoffen, das Veredeln von Biogas und Deponiegas, die Abgasbehandlung, die Methanreinigung und die Dehydratisierung organischer Lösungsmittel. In diesem Zusammenhang wurden anorganische mikroporöse Membranen aufgrund ihrer thermischen und chemischen Stabilität intensiv untersucht. Die Membran-Kandidaten sind beispielsweise Silica, Zeolithe, Kohlenstoff-Molekularsiebe und Graphen/Graphenoxid-Membranen.

Es gibt drei Mechanismen, nach denen die Membrantrennung grundsätzlich ablaufen kann, nämlich durch Knudsen-Diffusion, durch den Molekularsiebeffekt oder durch Lösungs-Diffusion.

Polymere Membranen sind im Allgemeinen nicht porös, und daher verläuft die Gaspermeation durch sie i.a. durch den Lösungs-Diffusions-Mechanismus. Dieser beruht auf der Löslichkeit spezifischer Gase in der Membran und deren Diffusion durch die dichte Membranmatrix. Man unterscheidet bei polymeren Membranen zudem zwischen gummiartigen Membranen, die oberhalb der Glasübergangstemperatur Tg des Polymeren arbeiten, und glasartigen Membranen, die unterhalb der Tg arbeiten.

Die Knudsen-Trennung basiert darauf, dass bestimmte Gasmoleküle durch Membranporen passieren, die klein genug sind, um das Passieren des gesamten Gases zu verhindern.

Der Molekularsiebmechanismus beruht auf einem Größenausschluss zur Trennung von Gasmischungen. Poren innerhalb der Membran haben eine streng kontrollierte Größe relativ zum kinetischen Durchmesser der Gasmoleküle. Dies ermöglicht die Diffusion der kleineren Gasmoleküle in sehr viel höherer Geschwindigkeit als die der größeren Gasmoleküle.

Membranen ermöglichen die Trennung von Gasmischungen, die aus Komponenten mit unterschiedlichen kinetischen Moleküldurchmessern bestehen, da größere Moleküle durch die Membran ausgeschlossen werden, während die kleineren Moleküle sie durchdringen.

Als Adsorbentien zur Gastrennung werden neben MOFs (metal-organic frameworks) und Polymeren hauptsächlich Zeolithe und Kohlenstoffmaterialien verwendet. Die Kohlenstoffadsorbentien sind meist hochporöse Aktivkohle-Materialien, die zusätzlich zur hohen Porosität eine gewisse Selektivität für die $CO_2$-Adsorption aufweisen. Um diese Selektivität zu steigern, werden die Oberflächen der Kohlenstoffmaterialien in der Regel mit Basen wie z.B. KOH imprägniert. Verbreitet ist z.B. derart imprägnierter Kohlenstoff aus Biomasse. Beispielsweise sind carbonisierte Polymere wie carbonisiertes Polypyrrol, Polyindol, Melamin- oder Harnstoffharze, PVDF sind als Adsorbentien für $CO_2$ bekannt.

Aminfunktionalisierte oder mit Base imprägnierte Kohlenstoffe aus Polyacrylnitril-Fasern (im Folgenden als PAN-Fasern bezeichnet) und deren Einsatz für die Adsorption von $CO_2$ sind ebenfalls bereits bekannt. (Hsiao, H.-Y., Huang, C.-M., Hsu, M.-Y. & Chen, H. Preparation of high-surface-area PAN-based activated carbon by solution-blowing process for CO2 adsorption. Separation and Purification Technology 82, 19-27; 10.1016/j.seppur.2011.08.006 (2011). Derartige PAN-Fasern werden z. B. durch Nass-Spinnen einer PAN-Lösung und anschließende Carbonisierung erhalten (Hsiao, a.a.O., Shen, W., Zhang, S., He, Y., Li, J. & Fan, W. Hierarchical porous polyacrylonitrile-based activated carbon fibers for CO2 capture. J. Mater. Chem. 21, 14036; 10.1039/C1JM12585K (2011); Li, L. et al. Nitrogen-Enriched Porous Polyacrylonitrile-Based Carbon Fibers for CO2 Capture. Ind. Eng. Chem. Res. 57, 11608-11616; 10.1021/acs.iecr.8b01836 (2018).

Ebenfalls bereits bekannt ist die Herstellung von carbonisierten PAN-Fasern durch Electrospinning einer PAN-Lösung in Dimethylformamid (DMF) und nachfolgende Carbonisierung der Fasern (Kim, D. W., Jung, D. W., Adelodun, A. A. & Jo, Y. M. Evaluation of CO2 adsorption capacity of electrospun carbon fibers with thermal and chemical activation. J. Appl. Polym. Sci. 134, 45534; 10.1002/app.45534 (2017). Der Polymerlösung wird vor dem Elektrospinnen Harnstoff zur Aktivierung zugesetzt. Die Carbonisierung erfolgt bei 200 °C während 4 h an Luft. Anschließend erfolgt eine Aktivierung im $CO_2$-Strom bei 600-800 °C während 15 min.

R. Schierholz et al. (RSC Adv., 2019, 9, 6267) beschreiben die Carbonisierung von nicht vorbehandelten PAN-Fasern bei *in situ*-Beobachtung unter dem Mikroskop im Ultrahochvakuum. Die Temperatur wird dabei nach jedem Carbonisierungsschritt auf Raumtemperatur abgesenkt und anschließend auf eine höhere Temperatur als im jeweils vorherigen Schritt erhöht.

Weitere bereits bekannte Kohlenstoff-Adsorbentien sind carbonisiertes Bulk-PAN, sowie carbonisiertes PAN-Copolymer (Travis, W. Dissertation. University College London, 2014; Nandi, M. et al. Unprecedented CO2 uptake over highly porous N-doped activated carbon monoliths prepared by physical activation. Chemical Communications (Cambridge, England) 48, 10283-10285; 10.1039/C2CC35334B (2012).

Kohlenstofffaseradsorbentien bestehen aus hochporösen Kohlenstofffasern, die zu einem Vlies (Fasermatte) verarbeitet vorliegen. Die Fasermatte weist daher zusätzlich zu den genannten Poren der Faser selbst noch Faserzwischenräume auf, die vergleichsweise groß sind.

Nachteil der bisher bekannten Kohlenstoff-Adsorptionsmaterialien ist eine verhältnismäßig geringe Selektivität. Die Effizienz der Trennung hängt zudem explizit von der Menge an Adsorbat auf dem Adsorbens ab. Die Adsorption erfolgt über van der Waals-Wechselwirkungen mit den Porenwänden sowie über Säure-Base-Wechselwirkungen.

Ultramikroporöse Zeolith-Adsorbentien dagegen sind teuer und sehr empfindlich gegen Feuchtigkeit.

CN 106 36 26 84 A offenbart ein Verfahren zur Herstellung eines Stickstoff-haltigen Kohlenstoffnanofaser-Materials, das zur Adsorption von $CO_2$ geeignet ist. Das Verfahren umfasst a) Zugabe eines Vorläuferpolymers der Kohlenstoffnanofaser in ein Lösungsmittel bei Raumtemperatur und Rühren der Mischung während 12-24 Stunden, bis das Vorläuferpolymer vollständig gelöst ist, wobei eine Lösung mit 6-15 Gew.% Polymergehalt erhalten wird, b) Elektrospinnen dieser Lösung zur Herstellung eines Nanofaser-Materials, c) Carbonisierung , d) Oberflächenbehandlung, und e) Aktivierungsbehandlung. Als Vorläuferpolymer werden Polypyrrol, PAN, Polyimid, Polybenzoxazin, Polyvinylbutyral, Polyanilin, Polybezimidazol, Phenolharz A, Polyvinylpyrrolidon, Polyvinylalkohol, Cellulose, Celluloseacetat und Ethylcellulose sowie Gemische daraus offenbart. Die Carbonisierung erfolgt durch Erhitzen des Vorläufer-Nanofasermaterials in einem ersten Schritt auf 150 bis 300 °C in Luft zur Präoxidationsbehandlung während 0,5 bis 5 h, und anschließend Erhitzen auf 600 bis 1600 °C unter Schutzgas während 0,5 bis 20 h. Die Oberflächenmodifikationsbehandlung umfasst drei Schritte: zunächst Oxidation mit konzentrierter Säure, insbesondere mit einem Gemisch aus konz. $H_2SO_4$/konz. $HNO_3$ bei 50 bis 70 °C während 1 bis 5 h, danach mehrfache Ultraschallbehandlung mit dest. Wasser und Trocknen zur Entfernung restlicher N- oder S-Oxide von der Oberfläche, und anschließend eine Ätzbehandlung in einer $NH_3$-Atmosphäre bei 600 bis 1000 °C während 2 bis 5 h. Bei der Aktivierungsbehandlung wird die erhaltene Nanofaser in einer Lösung aus Kaliumhydroxid oder Kaliumcarbonat gerührt bis zur vollständigen Dispersion, abfiltriert und anschließend bei 800-1000°C unter Stickstoff-Schutzgas während 0,5 bis 2 h erhitzt, dann mit HCl gespült, mit deionisiertem Wasser gewaschen und 5 bis10 h bei 50-80 °C getrocknet. Das Verfahren ist durch die zahlreichen Schritte sehr zeit-, arbeits- und energieaufwendig.

Es ist bekannt, Metalloxid-Kohlenstoffaser-Komposite für Luftfiltermembranen durch Elektrospinnen und Carbonisieren herzustellen, z.B. aus CN 106582148 A. Der Kohlenstoff stammt aus Raps, Moos oder Kohl, d.h. Biomasse. Das Metalloxid ist z.B. $TiO_2$. Nach dem Elektrospinnen werden die erhaltenen Fasern in 5 M Salzsäure während 10 h bei 60 °C eingetaucht und anschließend gewaschen und getrocknet, um Verunreinigungen zu entfernen. Zusätzlich kann die Membran auch Silber-Nanopartikel enthalten, die beim Elektrospinnen eingebracht werden.

Metalloxidhaltige bzw. Intermetallverbindungs-haltige Kohlenstoffasern, die durch Elektrospinnen und Carbonisieren erhalten werden, sind auch z. B aus CN 104466168 A, US 2007/0048521 A1 und US 2013/0126794 A1 bekannt. Derartige Materialien werden als Katalysatoren eingesetzt, z.B. zum Methan-Kohlendioxid-Reforming, oder hauptsächlich als Elektrodenmaterial für Lithium-Ionen-Batterien.

US 2016/0036037 A1 offenbart ein Verfahren zur Herstellung einer Lithiumlonenbatterie durch Elektrospinnen. Unter anderem ist ein leitfähiges Material offenbart, das durch Elektrospinnen von PAN und anschließendes Carbonisieren mittels eines Lasers erhalten wird und elementaren Schwefel, schwefelhaltige Verbindungen wie $Li_2S$, Silizium, siliziumhaltige Verbindungen enthält, oder auch verschiedene Metall-Mischoxide enthält.

WO 2019/004974 A2 offenbart ein Verfahren zur Herstellung von Kohlenstoffnanofaser-Bündeln durch Elektrospinnen, einen Stabilisierungsschritt durch Oxidation bei niedriger Temperatur unter Einwirkung von Zugspannung und anschließende Carbonisierung. Die erhaltenen Kohlenstofffasern sind zur Verwendung als Anodenmaterial in Lithium-Ionen-Batterien vorgesehen.

CN 107 051 382 A offenbart ein Verfahren zur Herstellung eines Kohlenstofffasermaterials unter Verwendung ein Hybrid-Elektrospinnverfahren, bei dem eine Kompositfaser aus PAN und einem Porenbilder hergestellt wird.

Besonders interessant ist es, für die elektrochemische Reduktion von $CO_2$ und die Synthese von $NH_3$ geeignete Komponenten herzustellen. Da die elektrochemische Reduktion von Gasen an 3-Phasengrenzen stattfindet und die Effizienz vom Anteil des Reaktionsgases im Gasstrom abhängt, muss vorab eine Anreicherung des Reaktionsgases erfolgen. Dafür (also für die Abtrennung und damit Anreicherung von z.B. $CO_2$ oder $NH_3$) wurden von den Erfindern geeignete Materialien gesucht, deren Anwendung direkt im Reaktor möglich ist. Mit Hilfe des Fasermaterials soll die elektrochemische Reduktion von $CO_2$ mit Wasser oder Wasserstoff zu Synthesegas, Methan, Ethylen, Formaldehyd, Ameisensäure sowie weiteren Kohlenwasserstoffen und Alkoholen durchgeführt werden.

Weiterhin soll bei der Power-to-Ammonia Methode idealerweise das $NH_3$ aus dem entstandenen Mischgasstrom auf der Produktseite entfernt werden.

Aufgabe der Erfindung ist es auf diesem Hintergrund, ein Verfahren zur Herstellung von Kohlenstofffasermaterial bereitzustellen, das die genannten Nachteile überwindet und einfach und kostengünstig durchführbar ist sowie ein Kohlenstofffasermaterial liefert, dass eine hohe Selektivität für $CO_2$ oder $NH_3$ zeigt und die Adsorption großer Mengen dieser Gase ermöglicht.

## Beschreibung der Erfindung

Die Erfinder haben erkannt, dass die Bedingungen der Carbonisierung der PAN-Fasern eine wichtige Rolle bei der Herstellung von Kohlenstoffmaterialien aus PAN hat. Ihr Einfluss auf die Erzeugung von Poren bestimmter Größen wie z.B. Ultramikroporen wurde bisher außer Acht gelassen. Diese Ultramikroporen erlauben eine selektive Adsorption durch einen Molekularsiebeffekt, ohne Säure-Base-Wechselwirkungen zu nutzen. Hierdurch steigt die Reversibilität der Adsorption, und die Anwendung wird effizienter. Es hat sich im Rahmen der vorliegenden Erfindung gezeigt, dass die Ultramikroporen der Schlüssel zur erfolgreichen Adsorption großer Mengen $CO_2$ bei hoher Reversibilität und Selektivität vor allem bei geringen Relativdrücken sind.

Die Aufgabe der Erfindung wird gelöst durch das Verfahren nach Anspruch 1. Es umfasst folgende Schritte:

a) Herstellen einer Lösung von Polyacrylnitril in einem geeigneten organischen Lösungsmittel, wobei die Lösung nur aus Lösungsmittel und Polyacrylnitril besteht
b) Elektrospinnen der in a) erhaltenen Lösung und Trocknen des erhaltenen Fasermaterials
c) Vernetzen des erhaltenen Fasermaterials durch Erwärmen auf 150 bis 350 °C in Luft- oder Sauerstoffatmosphäre während 1 bis 30 h
d) Carbonisieren des erhaltenen Fasermaterials in einer Schutzgasatmosphäre bei einer Temperatur im Bereich von 600 bis 900 °C noch bevorzugter 800 bis 875 °C, ohne Einwirkung von Zugspannung.

Die PAN-Lösung in Schritt a) enthält keine Metallverbindungen, Intermetallverbindungen, Siliziumverbindungen, Schwefel, Schwefelverbindungen, und/oder Siliziumverbindungen, die z.B. in US 2013/0126794 A1, US 2016/00306037 A1, CN 106582148 A, CN 104511279 A, offenbart sind. Diese reagieren im Lauf der nachfolgenden Carbonisierung insbesondere zu Metalloxiden, Metallmischoxiden, oder Intermetallverbindungen, die in den Fasern enthalten sind. Erfindungsgemäß bestehen die carbonisierten Fasern dagegen nur aus dem Pyrolyseprodukt von PAN.

Bevorzugt besteht die Lösung in Schritt a) aus DMF und Polyacrylnitril.

Das in Schritt b) erhaltene Fasermaterial wird vor der eigentlichen Carbonisierung vernetzt, z.B. bei 250 °C während 3 bis 30 h, bevorzugt 8 bis 20 h, noch bevorzugter über Nacht. Durch das Erwärmen findet die im Folgenden im Schema 1 in Schritt a) dargestellte Cyclisierung und dadurch eine Quervernetzung der Fasern statt, die die PAN-Fasern stabilisiert. Darüber hinaus findet im Verlauf der Vernetzung eine Oberflächenoxidation und teilweise Abspaltung von Stickstoffverbindungen statt.

Es hat sich überraschenderweise gezeigt, dass mit Hilfe dieses gegenüber CN 106362684 A deutlich vereinfachten Verfahrens Kohlenstofffasern erhalten werden können, die eine besonders gute, d.h. selektive und hohe, $CO_2$-Absorption zeigen. Insbesondere ist weder eine Oberfächenmodifikation noch eine Oberflächenaktivierung der Fasern nach dem Elektrospinnen durch Behandlung mit chemischen Reagentien und/oder Anlegen einer Zugspannung notwendig, um diese Eigenschaften zu erzielen. Bevorzugte Ausführungsformen des erfindungsgemäßen Verfahrens sind in Ansprüchen 2 bis 5 definiert.

Die Erfindung umfasst weiter die Verwendung eines Kohlenstofffasermaterials mit einem bestimmten hohen Anteil an Ultramikroporen mit einer Porengröße von <0,4 nm, erhältlich durch das genannte Verfahren, zur Abtrennung von $NH_3$ aus Gasgemischen. Das erfindungsgemäße Kohlenstofffasermaterial wird im Folgenden auch als Nanofasermatten bezeichnet.

## Beschreibung der Figuren

Der Zusammenhang zwischen Carbonisierungstemperatur und Adsorptionseigenschaften für Ar und $CO_2$ ist in Fig. 1 dargestellt.

Fig. 2 und Fig. 4 zeigen das adsorbierte Volumen Ar bzw. $CO_2$ pro g Kohlenstofffasermaterial bei verschiedenen relativen Drücken in Abhängigkeit von der Carbonisierungstemperatur.

Fig. 3 stellt die Abhängigkeit des Quotienten aus adsorbiertem $CO_2$-Volumen und Oberfläche des Materials in Abhängigkeit von der Carbonisierungstemperatur dar. Es ist deutlich erkennbar, wie der Quotient bei ca. 850 °C steil abfällt, und sich ab ca. 980 °C kaum noch ändert.

Fig. 5 stellt das kumulative Porenvolumen in Abhängigkeit von der Porengröße für verschiedene Carbonisierungstemperaturen dar.

Fig. 6 zeigt das adsorbierte bzw. desorbierte Volumen Ar bei verschiedenen relativen Drücken für Carbonisierungstemperaturen von 600 °C bzw. 700 °C.

Fig. 7 zeigt REM-Aufnahmen (30.000 Vergrößerung, 20 kV) von erfindungsgemäßen Kohlenstofffasern.

Fig. 8 bis Fig. 10 zeigen $NH_3$-Isothermen, gemessen bei 240 K, 273 K bzw. 298 K an erfindungsmäßen Proben, die bei unterschiedlichen Temperaturen carbonisiert wurden.

Fig. 11 zeigt einen Vergleich der Isothermen von $NH_3$ und $CO_2$, gemessen jeweils bei 273 K an bei verschiedenen Temperaturen carbonisierten erfindungsgemäßen Proben. Der linke Teil der Abbildung zeigt die Adsorption von $NH_3$, der rechte Teil die Adsorption von $CO_2$.

Fig. 12 zeigt die $NH_3/N_2$-Selektivität (IAST) einer Gaszusammensetzung mit einem Stoffmengenverhältnis 0,001:99,999 ($NH_3/N_2$) mit erfindungsgemäßen Proben, die bei unterschiedlichen Temperaturen carbonisiert wurden.

Fig. 13 zeigt die $NH_3/N_2$-Selektivität (IAST) einer Gaszusammensetzung mit einem Stoffmengenverhältnis 10:90 mit einer erfindungsgemäßen Probe, die bei 1000 °C carbonisiert wurde.

Fig. 14 zeigt die isosterische Adsorptionsenthalpie von $NH_3$, gemessen bei erfindungsgemäßen Proben, die bei unterschiedlichen Temperaturen carbonisiert wurden. Die Adsorptionsenthalpie wurde durch die isosterische Methode bestimmt. Die hierfür verwendeten Daten wurden aus den Isothermen durch lineare Interpolation zwischen zwei Isothermenpunkten erhalten.

Fig. 15 zeigt die $CO_2/N_2$-Selektivität bei einem Gasvolumenverhältnis $CO_2$:$N_2$ von 5:95, gemessen mittels dynamischer Gasadsorption bei erfindungsgemäßen Proben, die bei unterschiedlichen Temperaturen carbonisiert wurden.

Fig. 16 zeigt die $CO_2/N_2$-Selektivität bei einem Gasvolumenverhältnis $CO_2$:$N_2$ von 10:90, gemessen mittels dynamischer Gasadsorption bei erfindungsgemäßen Proben, die bei unterschiedlichen Temperaturen carbonisiert wurden.

Fig. 17 zeigt IAST-Berechnungen zur $CO_2/N_2$-Selektivität.

**Detaillierte Beschreibung**

Das nach dem erfindungsgemäßen Verfahren erhaltene Kohlenstofffasermaterial weist in den Fasern hauptsächlich Ultramikroporen auf, dagegen kaum Meso- oder Makroporen. Die Kohlenstofffasern sind porös mit Poren verschiedener Größen.

Erfindungsgemäß stellen die Ultramikroporen den größten Anteil der in den Fasern vorhandenen Poren dar, während weniger Meso- oder Makroporen vorhanden sind. Dies führt dazu, dass von dem erfindungsgemäßen Kohlenstofffasermaterial reversibel eine große Menge an $CO_2$ oder $NH_3$ adsorbiert werden kann.

Das Kohlenstofffasermaterial fällt nach dem Carbonisieren in Schritt c) als Vlies (Nanofasermatte) an, das ohne weitere Verarbeitungsschritte direkt als Adsorptionsmaterial in Gasabtrennungsverfahren eingesetzt werden kann.

Die Dicke des in Schritt c) erhaltenen Vlieses beträgt bei Herstellung im Labormaßstab typischerweise in Abhängigkeit von der Spinnzeit 100 bis 2000 μm, bevorzugt 400 bis 1000 μm, bevorzugter 600 bis 900 μm, besonders bevorzugt 800 μm. Die Größe und Dicke der Nanofasermatte kann jedoch nach Anpassung des Elektrospinnanlage auf sehr viel größere Werte eingestellt werden.

Als *Polyacrylnitril (PAN)* ist erfindungsgemäß ein Polyacrylnitril-Homopolymer oder ein Polyacrylnitril-Copolymer mit bis zu ca. 5 bis 10 Gew.-% Anteil an einem oder mehreren Comonomeren einsetzbar. Als Comonomere sind z.B. Acrylsäure, Methacrylsäure, Itaconsäure und/oder Acrylamid geeignet. Das Polyacrylnitril ist entweder kommerziell erhältlich (z.B. von sigma-aldrich oder BOC Sciences) oder kann auf übliche Art und Weise hergestellt werden. Das Molekulargewicht des PAN Polymers in g/mol beträgt bevorzugt 50.000 bis 200.000, bevorzugt 80.000 bis 180.000, besonders bevorzugt 100.000 oder 150.000.

Als *Lösungsmittel* ist jedes organische Lösungsmittel geeignet, dass PAN lösen kann. Es ist insbesondere ein polares Lösungsmittel wie z.B. Dimethylformamid (DMF), Dimethylsulfoxid (DMSO), Dimethylacetamid (DMAC), Aceton, Methylethylketon, Ethanol bzw. Mischungen davon geeignet. Besonders geeignet ist DMF.

Die PAN-Lösung in Schritt a) hat erfindungsgemäß eine Konzentration von 5 bis 20 Gew.-%, bevorzugt 10 bis 15 Gew.-%, besonders bevorzugt ca. 10 Gew.-%. Sie wird hergestellt durch Zugabe des PAN in das Lösungsmittel und Rühren, ggf. unter Erwärmen, bis das PAN vollständig gelöst ist (optische Kontrolle). Es wird z.B. bei Raumtemperatur während 2 Tagen gerührt.

*Elektrospinnen* ist ein Faserherstellungsverfahren, das mit elektrischer Kraft geladene Fäden aus Polymerlösungen oder Polymerschmelzen bis zu einem Faserdurchmesser von einigen hundert Nanometern zieht. Das Verfahren erfordert weder den Einsatz von Koagulationschemie noch hohe Temperaturen, um feste Fäden aus der Lösung herzustellen. Damit eignet sich das Verfahren besonders für die Herstellung von Fasern aus großen und komplexen Molekülen. Die Standardlaborapparatur für das Elektrospinnen besteht aus einer Spinndüse (typischerweise einer oder mehreren Injektionsnadel(n)), beispielsweise 4 oder 16 Nadeln, die an eine Hochspannungs-Gleichstromversorgung (z.B. 5 bis 100 kV) angeschlossen ist, einer Spritzenpumpe und einem Kollektor, der geerdet sein oder auch bei negativen Spannungen von mehreren kV eingesetzt werden kann. Eine Polymerlösung, Sol-Gel, partikuläre Suspension oder Schmelze wird in die Spritze geladen und diese Flüssigkeit wird von einer Spritzenpumpe mit konstanter Geschwindigkeit aus der Nadelspitze extrudiert. Alternativ kann der Tropfen an der Spitze der Spinndüse durch Beschickung aus einem Sammlertank mit konstantem Förderdruck nachgefüllt werden. Diese Zuführung mit konstantem Druck funktioniert besser für niedrigviskose Einsatzstoffe. Wenn eine ausreichend hohe Spannung an einen Flüssigkeitstropfen angelegt wird, lädt sich der Flüssigkeitskörper auf, und die elektrostatische Abstoßung wirkt der Oberflächenspannung entgegen und der Tropfen wird gedehnt; an einem kritischen Punkt bricht ein Flüssigkeitsstrom aus der Oberfläche aus. Dieser Ausbruchspunkt ist bekannt als der Taylorkegel. Wenn die molekulare Kohäsion der Flüssigkeit ausreichend hoch ist, findet kein Strömungsabriss statt (wenn ja, werden die Tröpfchen elektrogespritzt) und es entsteht ein geladener Flüssigkeitsstrahl. Während der Strahl im Flug trocknet, ändert sich der Modus des Stromflusses von ohmsch zu konvektiv, wenn die Ladung an die Oberfläche der Faser wandert. Der Strahl wird dann durch einen Aufschlagprozess verlängert, der durch elektrostatische Abstoßung an kleinen Biegungen in der Faser ausgelöst wird, bis er schließlich auf dem geerdeten Kollektor abgeschieden wird. Die aus dieser Biegeinstabilität resultierende Dehnung und Verdünnung der Faser führt zur Bildung gleichmäßiger Fasern mit Nanometer-Durchmessern. Der Kollektor rotiert einerseits und die Nadel wird zudem lateral hinund herbewegt, was zu einer gleichmäßigen Dicke der Fasermatte führt. Durch das Trocknen der Faser während des Spinnens entsteht eine chaotische Bewegung der Faser und damit eine ungeordnete Abscheidung der gesponnenen Faser und Ausbildung einer Fasermatte. Der Kollektor kann z.B. eine Platte oder eine Trommel oder auch (in großtechnischen Anlagen) eine bewegte Matte sein.

Im erfindungsgemäßen Verfahren wird das Elektrospinnen nach einem Standardverfahren durchgeführt. Üblicherweise wird mit einem Elektrospinner, z. B. der Fa. IME Technologies, bei 10 bis 60 %, bevorzugt 15 bis 35 %, besonders bevorzugt 20 oder 30 % relativer Luftfeuchtigkeit und 20 bis 30 °C, bevorzugt 25 °C gearbeitet. Es hat sich aber gezeigt, dass diese Umgebungsparameter keinen signifikanten Einfluss auf die Eigenschaften des Kohlenstofffasermaterials haben. Die Flussrate beträgt z.B. 20 bis 60, bevorzugt 30 bis 50 und besonders bevorzugt 40 μl/min pro verwendeter Nadel, das Volumen 1,5 bis 20 ml, bevorzugt 2 bis 15 ml. Die Spinndauer hängt vom Volumen ab und beträgt z.B. bei 2,2 ml 1 h oder 2 h und bei 14,6 ml 6 h. Die Spannung beträgt z.B. 21 kV an der Anode und -4kV an der Kathode. Der Kollektor rotiert z.B. mit 1000 bis 2000 Upm, bevorzugt 1500 Upm. Der Abstand Nadel-Kollektor ist z.B. 100 bis 200 mm, bevorzugt 130 bis 190 mm, insbesondere 140 oder 180 mm. Der innere Nadeldurchmesser beträgt z.B. 0,5 bis 1 mm, bevorzugt 0,7 bis 0,9 mm, insbesondere 0,8 mm. Die laterale Bewegung der Nadel erfolgt über eine Gesamtdistanz von 80 bis 150 mm, bevorzugt 90 bis 130 mm, besonders bevorzugt 100 oder 120 mm. Die Geschwindigkeit der lateralen Nadelbewegung beträgt z.B. 20 mm/s, und die Umkehrverzögerung z.B. 500 ms. Auf diese Weise werden PAN-Nanofasermatten erhalten.

Nach dem Elektrospinnen in Schritt b) werden die erhaltenen Nanofasermatten bevorzugt zunächst getrocknet, z.B. bei 100 bis 200 °C, bevorzugt ca. 150 °C, während 1 bis 24 h, bevorzugt 1 bis 2 h, besonders bevorzugt für ca. 1 h in Luftatmosphäre.

Anschließend werden sie in Luft- oder Sauerstoffatmosphäre vernetzt, z.B. bei 150 bis 300°C, bevorzugt 200 bis 300 °C, besonders bevorzugt 250 °C während 8 bis 30 Stunden, z.B. über Nacht.

Der entscheidende Schritt zur Einstellung der gewünschten Eigenschaften des Kohlenstofffasermaterials ist erfindungsgemäß die Carbonisierung der so erhaltenen Nanofasermatten in Schritt c), und insbesondere deren Temperatur. Die Temperatur ist ein leicht einstell- und kontrollierbarer Parameter, dessen Einfluss auf die Porenstruktur und die Gasadsorptionseigenschaften bisher aber noch nicht untersucht wurde.

Bei der *Carbonisierung* handelt es sich um eine Pyrolyse. Dabei erfolgt eine Umwandlung der PAN-Fasern durch Cyclisierung, Dehydrierung und $N_2$-Eliminierung, wie schematisch im Folgenden dargestellt:

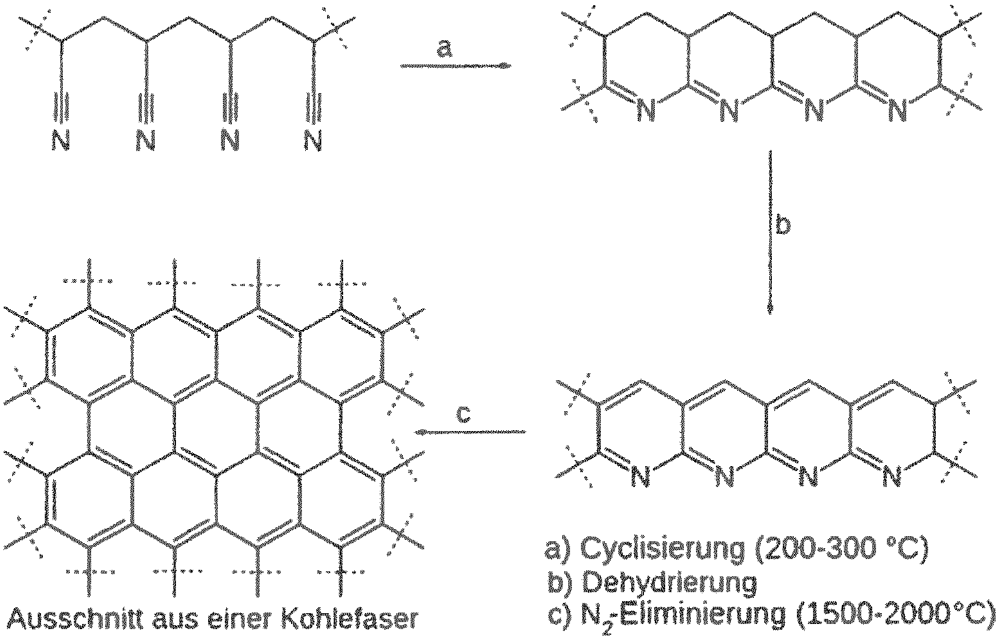


Die Cyclisierung (Schritt a)) findet dabei teilweise schon im Vernetzungsschritt b) statt, wie vorstehend erläutert.

Je nach Fortschritt der Reaktionen können demnach auf der Faseroberfläche Stickstoffatome in unterschiedlichen Hybridisierungszuständen vorliegen. Diese können z.B. durch XPS (Röntgenphotoelektronenspektroskopie) bestimmt werden.

Die *Carbonisierung* erfolgt erfindungsgemäß beispielsweise in einem Ofen bei vergleichsweise niedrigen Temperaturen von 600 bis 900 °C, besonders bevorzugt bei ca. 800 °C bis 850 °C.

Alternativ kann die Carbonisierung auch mit Laser oder IR-Beheizung sowie mit Mikrowellenbehandlung durchgeführt werden.

Es kommt erfindungsgemäß nicht auf die Art des Aufheizens an, sondern auf die Einhaltung der angegebenen Temperaturen bei der Carbonisierung, um die beanspruchten Eigenschaften des Fasermaterials zu erzielen.

Die Porengröße im nach der Carbonisierung erhaltenen Kohlenstofffasermaterial nimmt von niedrigen Carbonisierungstemperaturen (ca. 600 °C) zu höheren Carbonisierungstemperaturen (ca. 1000 °C) kontinuierlich ab, wie die Erfinder festgestellt haben. Ab 850 °C wird die Porengröße so gering, dass $CO_2$ bzw. $NH_3$ nicht mehr in die Poren diffundieren kann, so dass ab dieser Temperatur eine sprunghafte Änderung der Adsorptionseigenschaften des Materials in Bezug auf $CO_2$ und $NH_3$ zu beobachten ist. Es ist insbesondere eine Temperatur von 800 bis 850 °C geeignet, da hier $CO_2$ noch gut adsorbiert wird, die Poren für $N_2$ und Ar aber bereits zu klein sind.

Die Leitfähigkeit des erhaltenen Kohlenstofffasermaterials hängt ebenfalls von der Carbonisierungstemperatur ab, wie die Erfinder festgestellt haben. Bei Carbonisierung im Temperaturbereich von 800 bis 850 °C ist die elektrische Leitfähigkeit höher als z.B. bei Carbonisierung bei 600 °C oder 700 °C, was das Material für eine Anwendung als Elektrode geeigneter macht.

Die Carbonisierungsbehandlung wird erfindungsgemäß unter Schutzgas (Inertgas) durchgeführt. Geeignet sind z.B. Stickstoff, Argon oder Helium, am bevorzugtesten Argon. Das Schutzgas kann z.B. in den Ofen eingeleitet werden und ein Gasstrom während der Reaktionsdauer beibehalten werden. Vor der Carbonisierungsbehandlung wird der Ofen bevorzugt evakuiert und mit dem Schutzgas, z.B. Argon geflutet, um den Eintrag von Luft zu verhindern. Die Atmosphäre im Ofen ist durch eine Schutzgasatmosphäre möglichst frei von $O_2$ und $CO_2$. Die Carbonisierung wird erfindungsgemäß z.B. bei Atmosphärendruck unter Schutzgasatmosphäre durchgeführt, typischerweise unter Argon bei einer Flussrate von beispielsweise ca. 200 l/h. Es wird erwartet, dass bei anderen Flüssen oder Drücken gearbeitet werden kann, ohne dass signifikante Einflüsse auf das Produkt zu beobachten sind. Die Dauer der Carbonisierungsbehandlung beträgt typischerweise 1,5 bis 5 h, bevorzugt 2 bis 4 h, besonders bevorzugt 3 h. Die Aufheizrate beträgt typischerweise 200 bis 400 °C/h, bevorzugt 250 bis 350 °C/h, am bevorzugtesten 300 °C/h. Die Abkühlrate beträgt typischerweise 150 bis 250 °C/h, bevorzugt 200 °C/h. Die Aufheiz- und Abkühlzeit ist jeweils nicht in der angegebenen Carbonisierungsdauer enthalten, sondern kommt hinzu.

Das durch das erfindungsgemäße Verfahren erhaltene Kohlenstofffasermaterial zeigt ebene Oberflächen der Faser und aufgrund der lateralen Bewegung der Nadel während des Elektrospinnens keine Vorzugsorientierung (d.h. die Faser ist nicht geordnet aufgerollt oder in parallelen Schlingen angeordnet). Die glatte Oberfläche der Faser wurde durch REM bestätigt (Fig. 7). Der Faserdurchmesser ist gleichmäßig und nimmt mit steigender Carbonisierungstemperatur von ca. 250 nm auf 220 nm ab. Der Faserdurchmesser wird mit Hilfe von Rasterelektronenmikroskopie (REM) und der

Software ImageJ® geschätzt und basiert auf Durchschnittswerten von 20-30 Messungen.

Die *Porengröße* des Kohlenstofffasermaterials wird vorliegend wie im IUPAC Technical Report (https://doi.org/10.1515/pac-2014-1117; part 2, General definitions and terminology) definiert bezeichnet. Er beträgt bei

Ultramikroporen < 0,7 nm
Mikroporen < 2 nm
Mesoporen 2-50 nm
Makroporen > 50 nm.

Unter *"kinetischer Durchmesser"* von Gasen wird vorliegend der kleinste Durchmesser verstanden, den ein Molekül seiner Umgebung präsentieren kann. Er unterscheidet sich vom *Atomdurchmesser,* der die Atomgröße als Größe der Elektronenhülle angibt und der i. a. wesentlich kleiner ist als der kinetische Durchmesser. Es existieren mehrere Bestimmungsarten für den kinetischen Durchmesser laut CRS Handbook of Chemistry and Physics, nämlich aus Viskositätsdaten, der Van der Waals'schen Gleichung und der Wärmeleitfähigkeit. Auch eine Berechnung aus Bindungswinkeln, Bindungslängen und den Van-der-Waals-Halbmessern ist möglich. In den meisten Fällen weichen die nach den verschiedenen Methoden berechneten kinetischen Durchmesser nur um 2-3 % voneinander ab.

Im Rahmen der vorliegenden Anmeldung werden die folgenden in der Literatur angegebenen kinetischen Durchmesser für Gase vorausgesetzt: $CH_4$ 0,38 nm[1], Ar 0,340 nm[2], $N_2$ 0,364 nm[2], $CO_2$ 0,330 nm[2], $H_2$ 0,29 nm[1], $NH_3$ 0,260 nm[1] bzw. besser zu den experimentellen Ergebnissen passend 0,326 nm[3] ([1] B. Scholes, C.A. et al., Recent Patents on Chemical Engineering, 2008, 1, 52-66; [2] D.W.Beck, Zeolite Molecular Sieves: Structure, Chemistry and Use, Wiley, New York 1974, 593-724, [3] M.E. van Leeuwen, Fluid Phase Equilib., 1994, 99, 1-18).

Die Porengröße im Kohlenstofffasermaterial kann erfindungsgemäß durch Einzel-Gasadsorptionsmessungen mehrerer Gase mit verschiedenen kinetischen Durchmessern bestimmt werden, z.B. mit Ar, $N_2$, $CO_2$ und $O_2$. Die Grundlagen zu den Messmethoden sind im vorstehend genannten IUPAC Technical Report angegeben. Für die Bestimmung größerer Poren ist demzufolge die Messung mit Argon geeignet, für die Messung von Ultramikroporen jedoch nicht. Hierzu wird die Messung mit $CO_2$ benötigt.

Beispielsweise wird die Porengröße durch Adsorption von Ar bestimmt, wie in Fig. 2 dargestellt. Bei 600 °C und 700 °C carbonisierte Proben zeigen eine sehr langsame Adsorptionskinetik und Pseudoirreversibiliät, die eine vernünftige Messung verhindert (vgl. Fig. 6). Dies weist auf Poren mit sehr kleinem Durchmesser bzw. starke Tortuosität der Poren hin. Für bei 800 °C und höher carbonisierte Proben ist die Adsorption von Argon ist vollständig reversibel ohne Hysterese.

Die BET-Oberfläche wird bestimmt durch die Standardmethode der Adsorption von Argongas bei 87K mit anschließender Evaluation des Bereichs der Monolagenadsorption nach dem BET Modell. Es wird dazu die Gerätesoftware ASiQwin® (Quantachrome) eingesetzt.

Die BET-Oberflächenmessungen mit Argon sind in der folgenden Tabelle 1 gezeigt:

*Tabelle 1: BET Oberfläche von Proben aus Ar-Adsorptionsexperimenten*

| Probe | $S_{BET}$ ($m^2/g$) | Probe | $S_{BET}$ ($m^2/g$) |
|---|---|---|---|
| C800 | 13,4 | C925 | 15,0 |
| C825 | 12,4 | C950 | 14,3 |
| C850 | 13,1 | C975 | 16,0 |
| C875 | 13,2 | C1000 | 14,8 |
| C900 | 14,6 | C1100 | 20,0 |

C800 bezeichnet eine bei 800 °C carbonisierte Kohlenstofffaser-Probe, die anderen Bezeichnungen analog.

Die durch Argon-Adsorption bestimmte BET-Oberfläche $S_{BET}$ des erfindungsgemäßen Kohlenstofffasermaterials ist also relativ niedrig und liegt im Bereich von 12 bis 20 $m^2/g$ mit einer starken Variation, die von bei 800 °C carbonisierten Proben zu bei 1100 °C carboniserten Proben aufgrund der Verkleinerung des Faserdurchmessers (dadurch größere geometrische Oberfläche) leicht ansteigt.

Fig. 4 zeigt die $CO_2$ Adsorptions-Isothermen der erfindungsgemäßen Fasern. Anders als bei den Ar-Messungen konnten bei den bei 600 °C und 700 °C carbonisierten Proben die $CO_2$ Adsorption problemlos gemessen werden, was eine kinetische Hemmung der Ar-Adsorption impliziert, da die Adsorption von $CO_2$ bei 273 K sehr viel schneller ist als die von Ar bei 87 K. Die Isothermen zeigen eine ähnliche Form von C600 bis C850, nämlich einen steilen Anstieg, der bei höheren Drücken abflacht. Die Anfangssteigung ist für C600 und C700 ist etwas höher als für C800 und C850, was auf eine höhere Adsorptionsenergie aufgrund einer höheren Anzahl engerer Poren oder einer veränderten Oberflächenchemie hinweist. Der Unterschied ist jedoch nicht sehr groß und das Gesamtporenvolumen bei 1 bar ist fast identisch. C900 zeigt eine

kleinere Anfangssteigung, aber nur eine leicht verminderte adsorbierte $CO_2$-Menge bei 1 bar, während die Anfangssteigung und das adsorbierte Gesamtvolumen bei Carbonisierungstemperaturen von 950 °C und darüber signifikant abnehmen. C1100 erreicht ein leicht größeres adsorbiertes Volumen als C1000, was der leicht erhöhten Oberfläche ohne signifikante Änderung von Porosität oder Oberflächenchemie zuzuschreiben sein dürfte.

Fig. 3 zeigt, dass das adsorbierte $CO_2$-Volumen, dividiert durch die BET-Oberfläche, ein Maß für die Oberflächenaffinität für $CO_2$ darstellt. Der Wert ist praktisch konstant 5 $cm^3/m^2$ für C800 bis C875, und fällt steil auf weniger als 1 $cm^3/m^2$ bei höheren Carbonisierungstemperaturen > 950 °C. Der Wert 5 $cm^3/m^2$ ist außerordentlich hoch, verglichen mit anderen Kohlenstoffmaterialien, die normalerweise eine Oberfläche von einigen hundert $m^2$ benötigen, um eine ähnlich hohe $CO_2$-Adsorptionskapazität zu erzielen. Dieses Phänomen, das das erfindungsgemäße Kohlenstofffasermaterial zeigt, könnte einer hohen chemischen Affinität für $CO_2$ oder einem hohen Ultramikroporenvolumen zuzuschreiben sein, wobei die Ultramikroporen nicht für Ar zugänglich sind und daher nichts zur BET-Oberfläche beitragen.

Die aus $CO_2$-Adsorptionsversuchen abgeleiteten Textur-Eigenschaften der erfindungsgemäßen Kohlenstofffasermaterialien im Vergleich zu drei bekannten käuflichen Kohlenstoffen (Rußen) sind in der folgenden Tabelle 2 zusammengefasst:

*Tabelle 2: Aus $CO_2$-Adsorptionsexperimenten abgeleitete Textureigenschaften*

| Carbonisierungstemperatur | $S_{micro}$ (MC) | V<0.4nm (MC) | $V_{>0.4nm}$ (MC) | $V_{ges.}$ (MC) |
|---|---|---|---|---|
| °C | $m^2/g$ | $cm^3/g$ | $cm^3/g$ | $cm^3/g$ |
| 600 | 626 | 0,053 | 0,119 | 0,172 |
| 700 | 618 | 0,051 | 0,114 | 0,165 |
| 800 | 615 | 0,039 | 0,141 | 0,180 |
| 825 | 599 | 0,039 | 0,133 | 0,172 |
| 850 | 610 | 0,034 | 0,145 | 0,179 |
| 875 | 656 | 0,035 | 0,156 | 0,191 |
| 900 | 551 | 0,011 | 0,179 | 0,190 |
| 925 | 318 | 0,004 | 0,132 | 0,136 |
| 950 | 274 | 0 | 0,118 | 0,118 |
| 975 | 160 | 0 | 0,071 | 0,071 |
| 1000 | 151 | 0 | 0,069 | 0,069 |
| 1100 | 165 | 0 | 0,070 | 0,070 |
| SuperP | 299 | 0 | 0,134 | 0,134 |
| GP300 | 321 | 0,004 | 0,126 | 0,130 |
| BP2000 | 1173 | 0,007 | 0,470 | 0,477 |

$S_{micro}$ ist die Oberfläche der Mikroporen
$V_{<0,4nm}$ ist das Volumen von Poren mit einer Porengröße < 0,4 nm
$V_{>0,4nm}$ ist das Volumen von Poren mit einer Porengröße > 0,4 nm
$V_{ges}$. Ist das Gesamtporenvolumen
$E_{ads}$ ist die Adsorptionsenergie
MC bedeutet nach einer Monte Carlo Simulation (Grand Canonical Monte Carlo Simulation (GC-MC)) bestimmt
SuperP ist Carbon black SuperP® der Fa. Alfaesar
GP300 sind Graphene Plättchen von Sigma-Aldrich mit einer angegebenen BET-Oberfläche von 300 $m^2/g$
BP2000 ist Black Pearls® 2000 Carbon Black der Fa. Cabot.

Das Porenvolumen wurde aus GC-MC berechnet und in Poren größer und kleiner 0,4 nm aufgeteilt dargestellt. Das Porenvolumen <0,4 nm nimmt mit steigender Carbonisierungstemperatur ab, während das Gesamtporenvolumen ebenso wie die Mikroporenoberfläche leicht von C600 bis C900 ansteigen. C1000 zeigt keine Poren unter 0,4 nm und einen starken Abfall an Gesamtporenvolumen und Oberfläche.

Die käuflichen Kohlenstoffmaterialien zeigen gar keine Poren <0,4 nm, was ihre geringe $CO_2$-Aufnahme bei niedrigen Drücken erklärt. Das erfindungsgemäße Kohlenstofffasermaterial dagegen zeigt einen hohen Anteil an Ultramikroporen $V_{<0,4nm}$ von 0,01 bis 10, bevorzugter 0,02 bis 5, noch bevorzugter 0,025 bis 0,1, am bevorzugtesten 0,03 bis

0,06 $cm^3/g$, bestimmt durch $CO_2$-Adsorption und Auswertung mit DFT und GC-MC-Simulation.

Fig. 8 bis 10 zeigen Adsorptionsisothermen von Ammoniak, gemessen an verschiedenen erfindungsgemäßen Proben bei verschiedenen Temperaturen.

Es zeigte sich überraschenderweise, dass $NH_3$ und $CO_2$ dieselbe Tendenz bei den erfindunsgemäßen Materialien zeigen: bei C600 bis C800 wurde eine sehr hohe Adsorption erreicht. C900 erwies sich als kinetisch gehindert. Bei C1000 wurde nur eine geringe Adsorption des jeweiligen Gases beobachtet. $NH_3$ als Lewis-Base und $CO_2$ als Lewis-Säure erfordern zur effektiven Adsorption eine unterschiedliche Oberflächenchemie. Es ist sehr unwahrscheinlich, dass chemisch unterschiedliche Moleküle aufgrund von Veränderungen der Oberflächenchemie des Adsorbens dasselbe Adsorptionsverhalten zeigen. Daher ist bei den erfindungsgemäßen Materialien nicht die Oberflächenstruktur bzw. -chemie der entscheidende Faktor für die Adsorption, sondern die Zugänglichkeit der Ultramikroporen.

Der Vergleich der Adsorption von $NH_3$ und $CO_2$ (Fig. 11) zeigt, dass bei C600 bis C800 $NH_3$ in größeren Mengen adsorbiert wird als $CO_2$. Bei C1000 wird jedoch $CO_2$ stärker adsorbiert als $NH_3$. Dies könnte dadurch begründet sein, dass $NH_3$ Zugang zu einer größeren Anzahl Poren hat, die Poren dichter mit $NH_3$ gepackt werden können, d.h. mehr Moleküle $NH_3$ in dieselbe Pore passen als Moleküle $CO_2$, oder dass in den Poren eine unterschiedliche Oberflächenchemie vorliegt.

Aus der Literatur ist bekannt (M. Goncalves et al., Environ. Sc. Technol. 2011, 45, 10605-10610), dass die $NH_3$-Adsorptions-Kapazität linear mit der Menge an Sauerstoff-Oberflächengruppen ansteigt. In den erfindungsgemäßen Proben war jedoch keine Korrelation zwischen Oberflächenchemie (Sauerstoff oder Stickstoff) und der $NH_3$-Adsorptions-kapazität zu beobachten, wie aus den folgenden Tabellen hervorgeht.

Die Elementarzusammensetzung der Proben wurde durch Elementaranalyse und XPS bestimmt und ist in den folgenden Tabellen zusammengefasst:

*Tabelle 3: CHNO-Analyse*

| **Probe** | **C (Gew.-%)** | **N (Gew.-%)** | **O (Gew.-%** | **H (Gew.-%)** |
|---|---|---|---|---|
| **C600** | 63,5 | 23,0 | 11,8 | 2,1 |
| **C700** | 67,9 | 19,9 | 11,1 | 1,8 |
| **C800** | 72,6 | 16,2 | 10,6 | 1,4 |
| **C900** | 77,6 | 11,6 | 9,5 | 1,2 |
| **C1000** | 91,5 | 7,1 | 3,1 | 0,4 |
| **C1100** | 95,8 | 3,7 | 0,8 | 0,5 |

*Tabelle 4: XPS-Analyse*

| **Probe** | **C (at.-%)** | **N (at.-%)** | **O (at.-%)** |
|---|---|---|---|
| **C600** | 76,5 | 19,7 | 3,8 |
| **C700** | 80,4 | 16,8 | 2,8 |
| **C800** | 84,1 | 13,7 | 2,2 |
| **C900** | 86,6 | 11,0 | 2,4 |
| **C1000** | 92,6 | 4,3 | 3,1 |
| **C1100** | 95,1 | 3,1 | 1,8 |

Dies stellt einen weiteren Hinweis darauf dar, dass erfindungsgemäß die Porengröße der bestimmende Faktor für die Adsorptionskapazität ist, und nicht die Oberflächenchemie.

Bei den erfindungsgemäßen Fasermaterialien korrelieren die Adsorptionsdaten stark mit dem kinetischen Durchmesser des Adsorbats.

Der Zusammenhang zwischen kinetischem Durchmesser und Adsorptionskapazität der erfindungsgemäßen Proben geht aus der folgenden Tabelle hervor:

*Tabelle 5: Kinetischer Durchmesser und Adsorptionskapazität*

| Gas | Kinetischer Durchmesser (pm) | Proben mit hoher Adsorptionskapazität | |
|---|---|---|---|
| $N_2$ | 364 | | |
| Ar | 340 | C600* - C700* | |
| $CO_2$ | 330 | C600 - C900* | |
| $NH_3$ | 260/326 | C600 - C900* | |
| *: kinetisch gehindert | | | |

Der Pfeil rechts bedeutet, dass die Adsorptionskapazität von oben nach unten zunimmt.

Je kleiner die Moleküle bzw. Atome, desto kleiner sind die Poren, in die sie eindringen können. Die Porengröße nimmt mit steigender Carbonisierungstemperatur ab. Die Adsorptionskapazität ändert sich daher drastisch von einer Probe zur anderen, falls Moleküle nicht mehr in die Poren eindringen können. Der kinetische Durchmesser und der Porengrößeneffekt erklären daher das Adsorptionsverhalten der erfindungsgemäßen Nanofasermatten konsistent.

0.26 nm ist ein Wert, der häufig in der Literatur als kinetische Durchmesser für $NH_3$ angegeben wird. Allerdings wurde gezeigt, dass dieser Wert experimentelle Daten insbesondere bei Porendiffusion nicht hinreichend erklären kann. Der von van Leeuwen bestimmte Werte (0.326 nm) ist hingegen in guter Übereinstimmung mit den Befunden von Kanezashi et al. und wird daher hier verwendet. (M. Kanezashi, A. Yamamoto, T. Yoshioka, T. Tsuru, A. I. Ch. E., 2010, 56, 1204-1212, M.E. van Leeuwen, Fluid Phase Equilib., 1994, 99, 1-18).

$CO_2$ und $NH_3$ zeigen ein ähnliches Verhalten, da sie eine vergleichbare Molekülgröße haben. $CO_2$ und $NH_3$ haben eine sehr langsame Adsorptionskinetik auf C900 (sehr kleine Poren). Die Oberflächenchemie hat jedoch nur einen untergeordneten Einfluss auf die Adsorption.

$NH_3$ wird an Proben mit einer größeren Anzahl zugänglicher Poren stärker adsorbiert als $CO_2$ (C600 bis C800). $CO_2$ ist demgegenüber leicht begünstigt, wenn die Poren nicht zugänglich sind (C1000). Die Oberflächenchemie begünstigt die $CO_2$-Adsorption etwas, zumindest bei C1000.

Fig. 14 zeigt die isosterischen Adsorptionsenthalpien von $NH_3$ auf den Proben. Höhere Werte bedeuten eine stärkere Adsorption von $NH_3$ auf der Probe.

IAST (ideal adsorbed solution theory)-Berechnungen sagen eine hervorragende Selektivität der erfindungsgemäßen Materialien für $NH_3$ gegenüber $N_2$ vorher. Die Ergebnisse sind in Fig. 12 und 13 dargestellt.

Die Berechnungen sind jedoch nur als Näherung zu verstehen, da stark unterschiedlich adsorbierende Komponenten bei IAST-Berechnungen zu Abweichungen führen können. Die IAST-Ergebnisse lassen sich gut durch einen Molekularsiebeffekt erklären. C600 bis C800 verfügen über Poren, die für $NH_3$ zugänglich sind, für $N_2$ aber nicht. Hierdurch werden hohe Werte für die Selektivität erreicht. Bei C1000, d.h. bei einem Material ohne zugängliche Poren, nimmt die Selektivität für $NH_3$ stark ab.

Fig. 15 und 16 zeigen gemessene Werte für die $CO_2/N_2$-Selektivität, die in Übereinstimmung mit den IAST-Vorhersagen stehen (ca. 25 - 55 für C600 - C800). Nach Kenntnis der Erfinder befinden sich diese Werten mit unter den höchsten bisher gemessenen Werten für $CO_2/N_2$ auf kohlenstoffbasierten Proben.

Als Vergleich sind IAST-Berechnungen zu der $CO_2/N_2$-Selektivität in Fig. 17 dargestellt. Diese sind etwas höher als die gemessenen Werte (hoher zweistelliger bis niedriger dreistelliger Bereich).

Das erfindungsgemäße Kohlenstofffasermaterial ist insbesondere zur Abtrennung von $NH_3$ aus Gasgemischen einsetzbar. Bei den Gasgemischen kann es sich z. B. um Luft, Verbrennungsabgase, Erdgas, Biogas oder andere Gasgemische handeln.

Auch $H_2$ kann aufgrund seines geringen kinetischen Durchmessers aus geeigneten Gasgemischen (z.B. $CH_4/H_2$) mittels der erfindungsgemäßen Kohlenstofffasermaterialien abgetrennt werden.

Die erfindungsgemäßen Materialien sind vorteilhaft als Adsorbentien im Pressure Swing, alternativ im Temperature Swing sowie, mit besonderem Vorteil wegen der besonders hohen Selektivität bei niedrigen Drücken, im Vacuum Swing AdsorptionsVerfahren einsetzbar.

Die erfindungsgemäßen Kohlenstofffasern auch große Mengen Wasser adsorbieren. Sie könnten daher vorteilhaft zum Trocknen von Gasen eingesetzt werden.

Aus demselben Grund ist es wichtig, vor der Abtrennung von $CO_2$ oder $NH_3$ aus Gasen diese Gase zu trocknen, z.B. durch Abkühlung, da Wasserdampf mit $CO_2$ bzw. $NH_3$ konkurriert und daher die Trennleistung der Membran verringern würde.

Beispiele

**Synthese der Kohlenstofffasern**

**Beispiel 1 (nicht erfindungsgemäß)**

Es wurde PAN der Fa. sigma-aldrich oder von BOC Sciences mit einem Molekulargewicht von 150.000 g/mol verwendet.

Kohlenstofffasern wurden mit Elektrospinnen hergestellt. Zunächst wurden Lösungen von 10% Polyacrylnitril (PAN) in Dimethylformamid (DMF) vorbereitet. Dazu wurden 4 g PAN in 36 g DMF unter Rühren mit einem Magnetrührer bei Raumtemperatur während zwei Tagen gelöst. Die verschiedenen Proben wurden dabei aus jeweils derselben Lösung hergestellt. Die Lösung wurde in einem Electrospinner von IME Technologies in kontrollierter Atmosphäre direkt zu Fasermatten versponnen. Dazu wurden die in Tabelle 6 gezeigten Parameter verwendet.

*Tabelle 6: Standardparameter für Elektrospinnen*

| | | |
|---|---|---|
| **Klima** | **Temperatur** | 25°C |
| | **Luftfeuchtigkeit** | 20% |
| **Material** | **Flussrate** | 40 µL/min |
| | **Volumen** | 2,2 mL |
| | **Spinndauer** | 1 h/2 h |
| | **PAN wt%** | 10 |
| **Laterale Bewegung** | **Gesamtdistanz** | 100 mm |
| | **Startposition** | -50 mm |
| | **Distanz** | 100 mm |
| | **Geschwindigkeit** | 20 mm/s |
| | **Umkehrverzögerung** | 500 ms |
| **Abstände** | **Nadel - Kollektor** | 140 mm |
| | **Innerer Nadeldurchmesser** | 0,8 mm |
| **Kollektorbewegung** | **Rotation** | 1500 Upm |
| **Spannung** | **Positive Elektrode** | 21 kV |
| | **Negative Elektrode** | -4 kV |

Nach dem Elektrospinn-Verfahren wurden die Matten im Ofen an Luft bei 150°C über Nacht getrocknet und anschließend in Luftatmosphäre bei 250°C über Nacht vernetzt. Zuletzt wurden die vernetzten Matten nach Erreichen der Zieltemperatur für 3 Stunden bei 1000°C im zuvor evakuierten und mit Argon gefluteten Ofen carbonisiert und anschließend abgekühlt. Die Aufheizrate betrug dabei 300°C/h, die Abkühlrate 200°C/h, die Flussrate des Argon 200 L/h.

**Beispiel 2**

Eine 10 Gew.-%-ige Lösung von PAN (Mw 150.000 g/mol) in DMF wurde durch Zugabe von 8 g PAN zu 72 g DMF und Rühren bei Raumtemperatur während zwei Tagen hergestellt. Diese Lösung wurde im Elektrospinn-Verfahren eingesetzt, um PAN-Nanofasermatten herzustellen. Das Verfahren wurde in einer kontrollierten Atmosphäre mit den in Tabelle 7 angegebenen Parametern durchgeführt:

*Tabelle 7: Parameter für das Elektrospinn-Verfahren mit einer 10 Gew.-% Lösung von PAN in DMF*

| | | |
|---|---|---|
| **Klima** | **Temperatur** | 25°C |
| | **Luftfeuchtigkeit** | 30% |

(fortgesetzt)

| | | |
|---|---|---|
| **Material** | **Flussrate** | 40 μL/min |
| | **Volumen** | 14,6 mL |
| | **Spinndauer** | 6 h |
| | **PAN wt%** | 10 |
| **Laterale Bewegung** | **Gesamtdistanz** | 120 mm |
| | **Startposition** | -60 mm |
| | **Distanz** | 120 mm |
| | **Geschwindigkeit** | 20 mm/s |
| | **Umkehrverzögerung** | 500 ms |
| **Abstände** | **Nadel - Kollektor** | 180 mm |
| | **Innerer Nadeldurchmesser** | 0,8 mm |
| | **Kollektordurchmesser** | 60 mm |
| **Kollektorbewegung** | **Rotation** | 1500 rpm |
| **Spannung** | **Positive Elektrode** | 21 kV |
| | **Negative Elektrode** | -4 kV |

Anschließend wurden die erhaltenen PAN-Nanofasermatten bei 150 °C während 1 h getrocknet. Die Vernetzung erfolgte in Luftatmosphäre bei 250 °C über Nacht (18 h). Zur Carbonisierung wurden die Proben mit einer Aufheizrate von 300 °C/h unter einem Argonstrom (200 L/h) bis zur gewünschten Carbonisierungstemperatur aufgeheizt, die für 3 h gehalten wurde. Die Abkühlgeschwindigkeit war 200 °C/h. Die Proben für die Temperaturserie 600 bis 1000 °C (C600 bis C1000) wurden aus derselben Lösung hergestellt.

**Analytik**

**REM**

Die REM-Aufnahmen wurden mit einem ETD-Detektor auf einem FEI Quanta® FEG 650 mit einer 30.000-fachen Vergrößerung aufgenommen. Die Beschleunigungsspannung war 20 kV. Bei der Probenvorbereitung wurden die Proben auf den Probenhalter geklebt und mit einem Kupferstreifen geerdet. Die Durchmesser der Fasern wurden mit Hilfe des Programms ImageJ® geschätzt. Der mittlere Durchmesser einer Probe basiert auf einer Messung von 20 bis 30 Faserdurchmessern.

**Gasadsorption**

Gasadsorptionsexperimente wurden an einem Quantachrome Autosorb® iQ2 Gerät durchgeführt, welches mit einem Cryocooler ausgestattet ist. Zur Vorbereitung wurden die Proben in ca. 1 mm breite kleine Streifen geschnitten, wovon 30 - 100 mg in das Probenröhrchen überführt wurden. Anschließend wurden die Proben für 8 Stunden bei 300°C ausgeheizt. Zur Bestimmung der Probenmasse wurden sowohl das leere Probenröhrchen als auch das mit Probe gefüllte Röhrchen nach dem Ausheizen jeweils dreimal gewogen. Aus der Differenz der Durchschnittsmassen wurde das Gewicht der Probe berechnet. Die Gasadsorptionsmessungen mit den Gasen Argon, Stickstoff und Sauerstoff wurden dabei in unterschiedlicher Reihenfolge jeweils auf derselben Probe durchgeführt. Dabei wurden für jedes Gas und jede Probe mehrere Messungen bei unterschiedlichen Temperaturen gemessen. Die Reihenfolge der Messungen wurde nicht systematisch festgelegt und basierte auf messtechnischen Erwägungen zum Zeitpunkt der Messung.

**Dynamische Gasadsorption**

Dynamische Gasadsorptionsexperimente wurden mit einer mixSorb® SHP von 3P Instruments durchgeführt. Die Steuerung und Auswertung erfolgte mit der Software mixSorb Manager® (Version 1.2.3.0) sowie 3P Sim® (Version 1.0.7).

Die Zusammensetzung der eingeleiteten Gase wurde mittels mehrerer Massenflussregler (MFC) eingestellt. Die

Messung der Gaszusammensetzung hinter der Probensäule wurde mit einem Massenspektrometer (MS) der Firma Pfeiffer (Pfeiffer Omnistar® GSD 320) durchgeführt. Das Temperieren der Probensäule erfolgte entweder mit einem Wasser/Ethylenglykolbad (-10 bis 70 °C) oder einem Heizmantel (90 bis 400 °C). Die Probensäule aus rostfreiem Stahl wird 8.5 cm hoch mit Probe befüllt, hat einen Innendurchmesser von 0.45 cm und ein Probenvolumen von etwa 1.0 $cm^3$. Ein Temperatursensor wird von oben 2.5 cm in die Schüttung eingeführt.

Vor einer Messung wurden 110 - 160 mg der entsprechenden Probe zunächst in etwa 1 cm lange und 1 mm breite Streifen zerschnitten und mittels eines Trichters in die Probensäule eingeführt. Durch vorsichtiges Nachführen mit einem Stab wurden Hohlräume gefüllt. Das Leergewicht und das Gewicht der Probensäule mit Probe wurden je dreimal bestimmt.

Das erste Ausheizen einer Probe erfolgte jeweils bei 300 °C für 2 h bei angelegtem Vakuum und einem Fluss des Trägergases (vorliegend Helium) von 7 mL/min, um adsorbiertes Wasser und andere Gase zu entfernen. Weiteres Ausheizen nach einer Messsequenz wurde für 1 h bei 70 °C, mit anliegendem Vakuum und einem Fluss des Trägergases von 7 mL/min durchgeführt.

Zum Start einer Messung wurde der angegebene Druck mit dem Trägergas Helium aufgebaut. Wenn Temperatur sowie Druck stabil waren, wurde das Experiment durch Zuschalten der Adsorptive $CO_2$ und $N_2$ auf die Probensäule gestartet. Die entsprechenden Parameter können Tabelle 8 entnommen werden. Nach Abschluss eines Durchbruchexperiments wurde das nächste Durchbruchsexperiment der Sequenz gestartet, indem der Adsorptivanteil auf den angegebenen Wert des nächsten Messpunktes erhöht wurde. Nach Ende einer Sequenz wurde wie beschrieben ausgeheizt und die nächste Sequenz analog durchgeführt.

*Tabelle 8 : Parameter der Messsequenzen. Helium wurde als Trägergas, $CO_2$ und $N_2$ als Adsorptivgas verwendet.*

| | Gesamtdruck [bar] | Temperatur [°C] | 1. Messpunkt | 2. Messpunkt |
|---|---|---|---|---|
| 1. Sequenz | 5,0 | 0 | $CO_2$: 0,5 %<br>$N_2$: 9,5 %<br>He: 90,0 % | $CO_2$: 1,0 %<br>$N_2$: 19,0 %<br>He: 80,0 % |
| 2. Sequenz | 5,0 | 0 | $CO_2$: 1,0 %<br>$N_2$: 9,0 %<br>He: 90,0 % | $CO_2$: 2,0 %<br>$N_2$: 18,0 %<br>He: 80,0 % |

Für jede Sequenz wurde zudem eine Referenzmessung mit Glaskugeln (0.4 - 0.6 mm Durchmesser) als Füllmaterial gemessen. Die adsorbierte Menge an $CO_2$ und $N_2$ wurde jeweils aus der Differenz von Proben- und Referenzmessung erhalten.

Die Selektivität wurde mit nachfolgender Formel bestimmt:

$$S = \frac{n_{CO_2}}{n_{N_2}} \cdot \frac{y_{N_2}}{y_{CO_2}}$$

$n_i$ - adsorbierte Stoffmenge von *i* in der adsorbierten Phase

$y_i$ - Volumenanteil von *i* in der Gasphase

**BET**

Die quantitative Auswertung der gemessenen Gasadsorptionsisothermen nach der BET-Methode wurde mithilfe der in der Gerätesoftware ASiQwin® (Quantachrome) implementierten Funktion durchgeführt. Der für die Auswertung verwendete Wertebereich wurde durch den in der Software vorhandenen "Micropore BET assistant" bestimmt, um eine reproduzierbare Punktauswahl nach den empfohlenen Kriterien zu erreichen. Da die (für höchste Genauigkeit insbesondere für die Bestimmung von Mesoporen eigentlich empfohlene[2]) parallele Messung des Sättigungsdampfdrucks mit Verwendung des Cryocoolers den Verzicht auf die Hälfte der Messkapazität bedeutet und für Dampfdrücke > 1 bar/760 Torr ohnehin nicht möglich ist, wurden die Sättigungsdampfdrücke für alle Messungen der NIST-Datenbank entnommen. Sie sind in der folgenden Tabelle 9 zusammengefasst. Bei Adsorptionsmethoden ist Torr die übliche Einheit, so dass vorliegend diese Einheit und nicht die entsprechende SI-Einheit verwendet wird.

*Tabelle 9: Sättigungsdampfdrücke der Gase Argon, Stickstoff, Sauerstoff und Kohlendioxid in Abhängigkeit von der Temperatur.*

| Temperatur [K] | $P_0$(Ar) [Torr] | $P_0(N_2)$ [Torr] | $P_0(O_2)$ [Torr] |
|---|---|---|---|
| **77,35** | 212,3* | 759,55 | 155,61 |
| **87** | 771,94** | 2072,1 | 537,44 |
| **273** | **$CO_2$:** | 26 141 | |

*eigene Messung, da unterhalb des Tripelpunktes (nur Literaturwerte für feste oder gasförmige Phase verfügbar)
**Wert für 87,45 K

Zur Berechnung der BET-Oberflächen wurden außerdem folgende Werte für die Fläche eines Gasmoleküls verwendet:

*Tabelle 10: verwendete Werte für die Querschnittsfläche von Argon, Stickstoff und Sauerstoff auf einer Oberfläche nach dem BET-Modell.*

| Gas | Argon @ 87 K | Stickstoff @ 77 K | Sauerstoff @ 77 K |
|---|---|---|---|
| **Fläche eines Gasmoleküls [A²]** | 14,2 | 16,2 | 14,1 |

**DFT und GC-MC**

Die Auswertung der gemessenen Isothermen nach der DFT-Methode (Density Functional Theory) und der GC-MC Methode (Grand Canonical Monte Carlo) wurde durch in der Software Quantachrome ASiQwin® (Version 5.0) implementierte Funktionen durchgeführt. Dabei wurde das vorgegebene Modell für Kohlendioxid bei 273 K für Schlitzporen verwendet. Für Ar bei 87 K wurde das QS-DFT Modell für Schlitzporen verwendet. Als Material wurde die in der Software hinterlegte Kohlenstoffreferenz ausgewählt.

**CHNO**

Für die Elementaranalyse wurde ein Varion EL cube elemental analyzer (Fa. Elementar, Deutschland) verwendet. 2 mg Probe jedes Fasermaterials wurden im CHN-Modus verbrannt, und 10 mg Probe im O-Modus. Im CHN-Modus wurden die Proben verbrannt, und die Verbrennungsprodukte wurden getrennt und detektiert. Im O-Modus wurden die Poren in reduzierender Atmosphäre behandelt, in der O-haltige Fragmente zu CO umgewandelt und als solche nachgewiesen wurden. Dieses Verfahren wurde in jedem Modus dreimal für jede Probe wiederholt. Zu den bei 900 °C carbonisierten Proben wurde Polyethylen zur besseren Verbrennung zugegeben.

**XPS-Analyse**

XPS-Analysen wurden mit einem Phi5000 VersaProbe II (ULVAC-Phi Inc., US) verwendet. Für die einzelnen Messungen wurde monochromatische 1,486 keV $Al_{K\alpha}$-Strahlung verwendet. Die Peak-Analyse wurde mit unter Verwendung von CasaXPS mit Shirley-Hintergrund und instrumentenspezifischen Korrekturen durchgeführt. Die Spektren wurden mit dem C1s Signal auf 284,4 eV kalibriert.

**Patentansprüche**

1. Verfahren zur Herstellung eines Kohlenstofffasermaterials, bestehend aus den Schritten

   a) Herstellen einer Lösung von Polyacrylnitril in einem geeigneten organischen Lösungsmittel wobei die Lösung nur aus Lösungsmittel and besteht
   b) Elektrospinnen der in a) erhaltenen Lösung und Trocknen des erhaltenen Fasermaterials

c) Vernetzen des erhaltenen Fasermaterials durch Erwärmen auf 150 bis 350 °C in Luftoder Sauerstoffatmosphäre während 1 bis 30 h
d) Carbonisieren des erhaltenen Fasermaterials in einer Schutzgasatmosphäre bei einer Temperatur im Bereich von 600 bis 900 °Cohne Einwirkung von Zugspannung.

**2.** Verfahren nach Anspruch 1, wobei das organische Lösungsmittel ausgewählt wird aus DMF, DMSO, DMAC, Aceton, Methylethylketon, und Ethanol und Mischungen davon.

**3.** Verfahren nach Anspruch 1 oder 2, wobei das Lösungsmittel DMF ist.

**4.** Verfahrennach einem oder mehreren der Ansprüche 1 bis 3, wobei das Polyacrylnitril ein Polyacylnitril-Homopolymer oder ein Polyacrylnitril-Copolymer mit einem Anteil an Comonomeren von 5 bis 10 Gew.-% ist.

**5.** Verfahren nach einem oder mehreren der Ansprüche 1 bis 4, wobei das Polyacrylnitril ein Molekulargewicht in g/mol von 50.000 bis 200.000 aufweist,

**6.** Verwendung des nach dem Verfahren gemäß einem oder mehreren der Ansprüche 1 bis 5 erhaltenen Kohlenstofffasermaterials zur Abtrennung von $NH_3$ aus einem Gasgemisch.

**7.** Verwendung nach Anspruch 6, wobei das Gasgemisch Abgas von Verbrennungsmaschinen, Erdgas, Biogas oder Luft ist.

## Claims

**1.** A method for producing a carbon fiber material comprising the steps of

a) preparing a solution of polyacrylonitrile in a suitable organic solvent, the solution consisting only of solvent and polyacrylonitrile,
b) electrospinning of the solution obtained in a) and drying of the obtained fiber material,
c) crosslinking of the obtained fiber material by heating to 150 to 350 °C in an air or oxygen atmosphere for 1 to 30 h
d) carbonization of the obtained fiber material in an inert gas atmosphere at a temperature in the range of 600 to 900 °C without applying tensile stress.

**2.** The method of claim 1, wherein the organic solvent is selected from DMF, DMSO, DMAC, acetone, methyl ethyl ketone, and ethanol and mixtures thereof.

**3.** The method according to claim 1 or 2, wherein the solvent is DMF.

**4.** The method of one or more of claims 1 to 3, wherein the polyacrylonitrile is a polyacylnitrile homopolymer or a polyacrylonitrile copolymer having a comonomer content of from 5 to 10 wt%.

**5.** The method of one or more of claims 1 to 4, wherein the polyacrylonitrile has a molecular weight in g/mol of from 50,000 to 200,000.

**6.** Use of the carbon fiber material obtained by the process according to one or more of claims 1 to 5 for separating $NH_3$ from a gas mixture.

**7.** Use according to claim 6, wherein the gas mixture is exhaust gas from combustion engines, natural gas, biogas or air.

## Revendications

**1.** Méthode de production d'un matériau en fibre de carbone comprenant les étapes suivantes

a) préparer une solution de polyacrylonitrile dans un solvant organique approprié, la solution étant constituée uniquement de solvant et de polyacrylonitrile,
b) électrofilage de la solution obtenue en a) et séchage du matériau fibreux obtenu,

c) réticulation du matériau fibreux obtenu par chauffage à une température de 150 à 350 °C dans une atmosphère d'air ou d'oxygène pendant 1 à 30 heures
d) carbonisation du matériau fibreux obtenu dans une atmosphère de gaz inerte à une température comprise entre 600 et 900 °C sans appliquer de contrainte de traction.

**2.** Méthode de la revendication 1, dans laquelle le solvant organique est choisi parmi le DMF, le DMSO, le DMAC, l'acétone, la méthyléthylcétone, l'éthanol et leurs mélanges.

**3.** Méthode selon la revendication 1 ou 2, dans laquelle le solvant est le DMF.

**4.** Procédé d'une ou plusieurs des revendications 1 à 3, dans lequel le polyacrylonitrile est un homopolymère de polyacylnitrile ou un copolymère de polyacrylonitrile ayant une teneur en comonomères de 5 à 10 % en poids.

**5.** Méthode d'une ou plusieurs des revendications 1 à 4, dans laquelle le polyacrylonitrile a un poids moléculaire en g/mol compris entre 50 000 et 200 000.

**6.** Utilisation du matériau en fibre de carbone obtenu par le procédé selon une ou plusieurs des revendications 1 à 5 pour séparer le $NH_3$ d'un mélange de gaz.

**7.** Utilisation selon la revendication 6, dans laquelle le mélange de gazx est constitué de gaz d'échappement de moteurs à combustion, de gaz naturel, de biogaz ou d'air.

FIG. 1

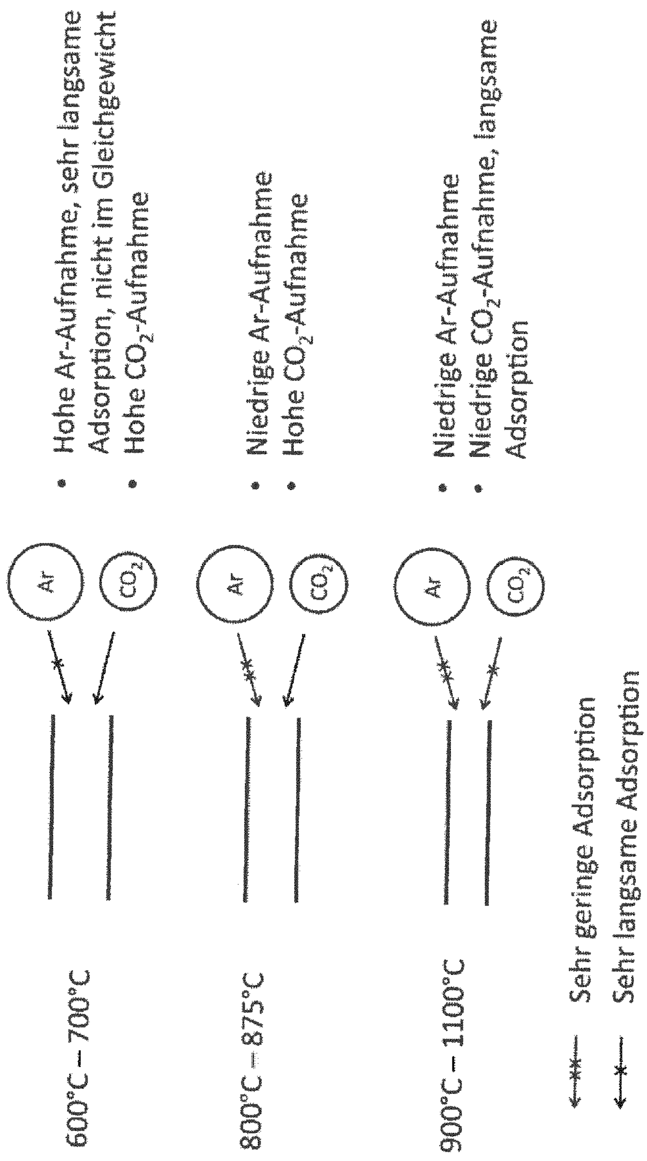
600°C – 700°C
Ar
CO2
• Hohe Ar-Aufnahme, sehr langsame Adsorption, nicht im Gleichgewicht
• Hohe CO2-Aufnahme
800°C – 875°C
Ar
CO2
• Niedrige Ar-Aufnahme
• Hohe CO2-Aufnahme
900°C – 1100°C
Ar
CO2
• Niedrige Ar-Aufnahme
• Niedrige CO2-Aufnahme, langsame Adsorption
Sehr geringe Adsorption
Sehr langsame Adsorption

FIG. 2

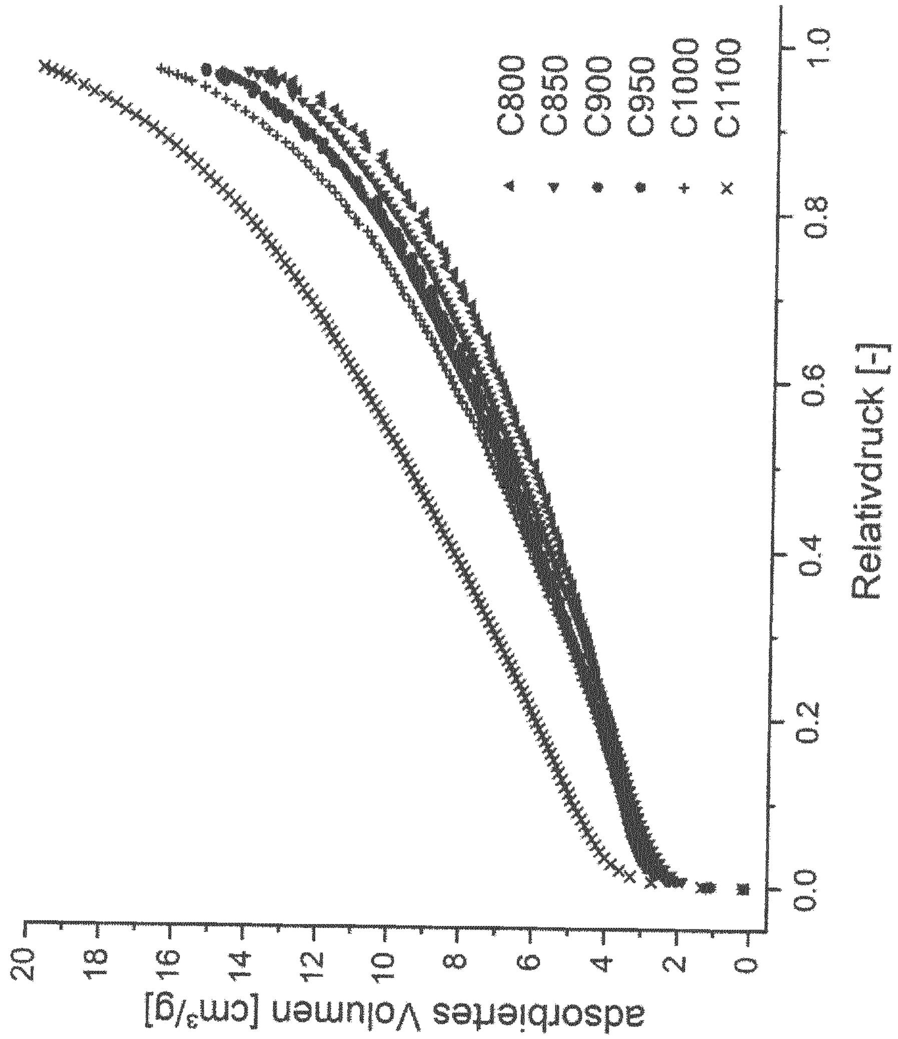
adsorbiertes Volumen [cm³/g]
Relativdruck [-]
0
2
4
6
8
10
12
14
16
18
20
0.0
0.2
0.4
0.6
0.8
1.0
C800
C850
C900
C950
C1000
C1100

FIG. 3

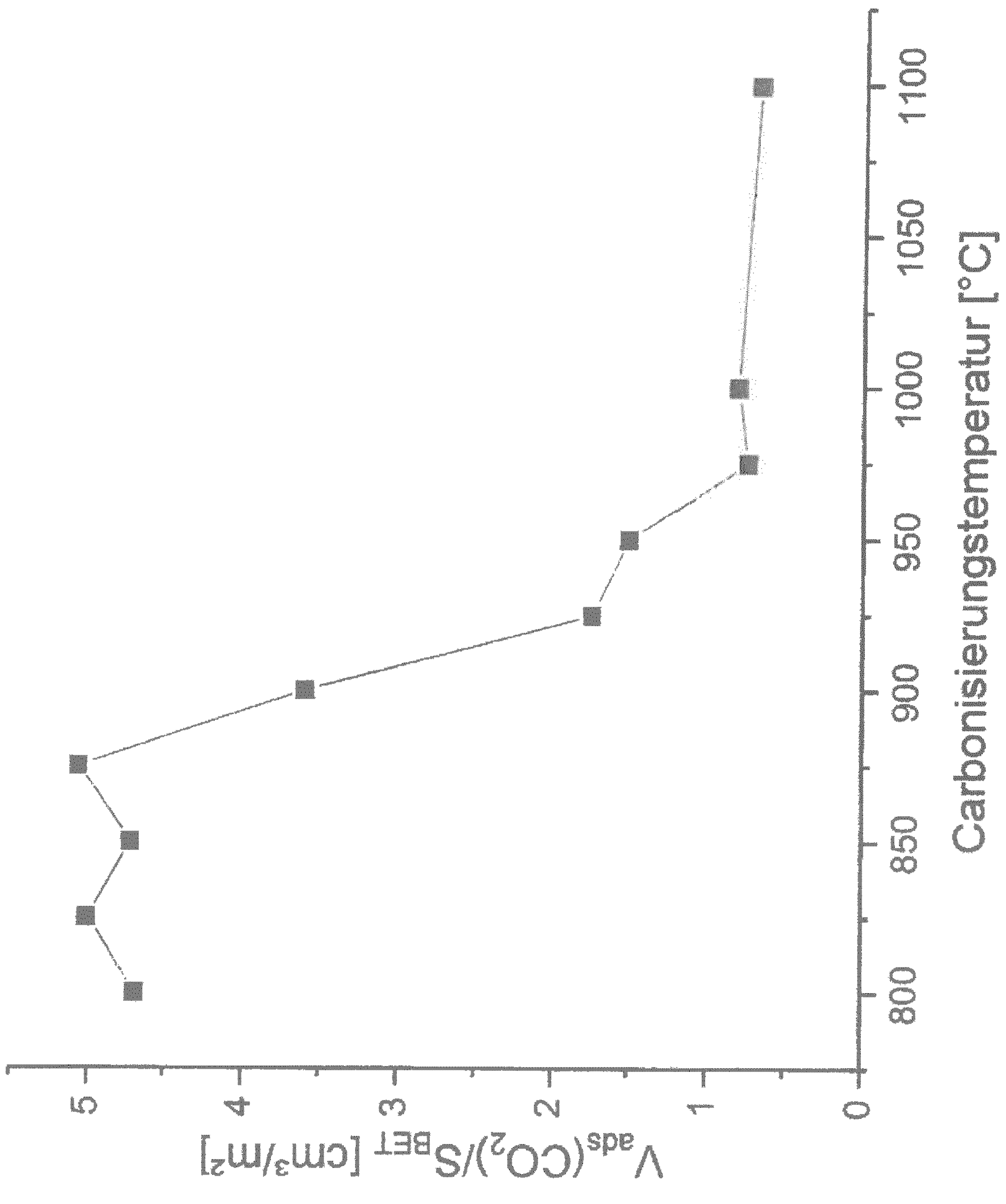
Carbonisierungstemperatur [°C]
800
850
900
950
1000
1050
1100
V_ads(CO_2)/S_BET [cm³/m²]
0
1
2
3
4
5

Fig. 4

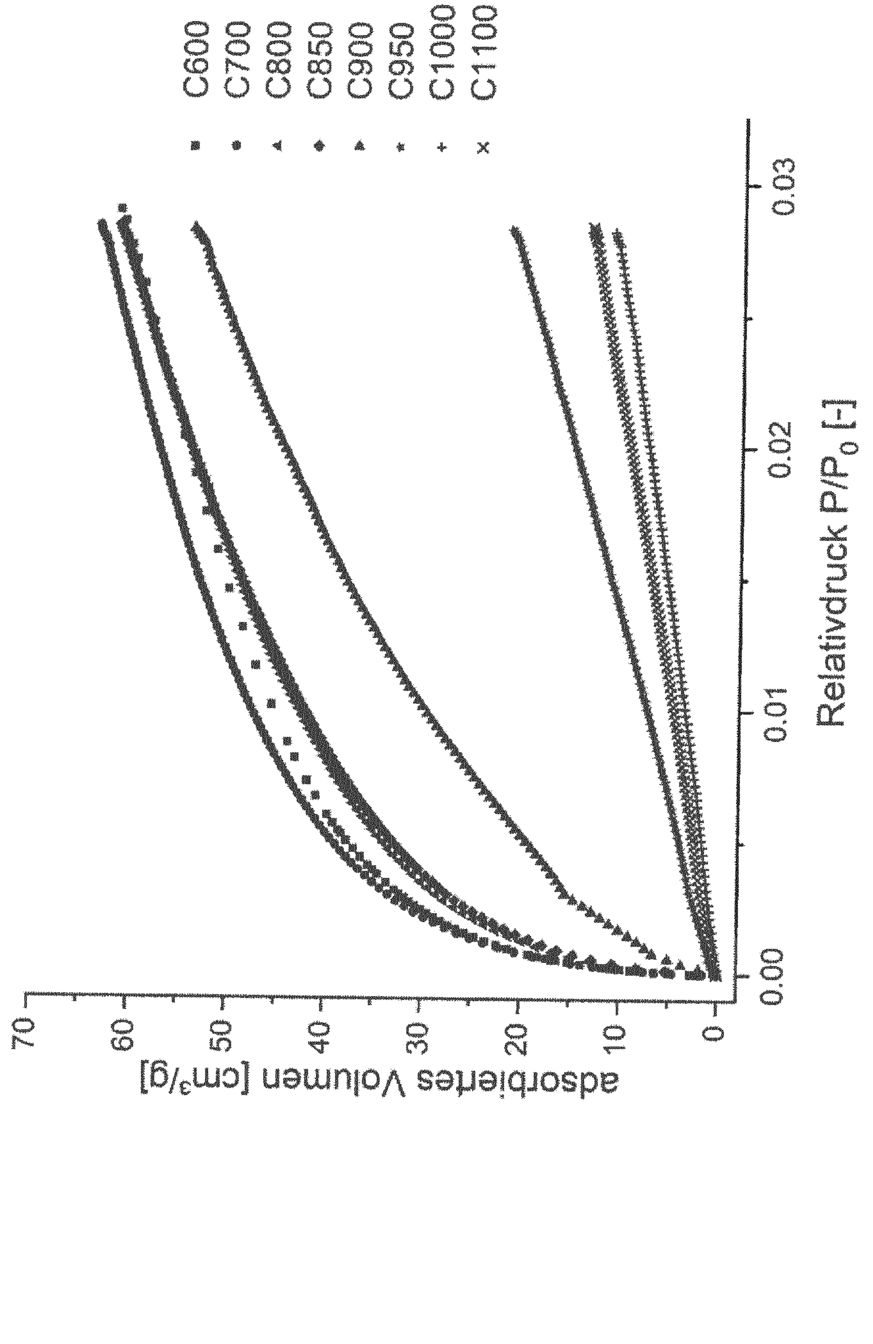
C600
C700
C800
C850
C900
C950
C1000
C1100
adsorbiertes Volumen [cm³/g]
Relativdruck P/P₀ [-]
0
10
20
30
40
50
60
70
0.00
0.01
0.02
0.03

FIG. 5

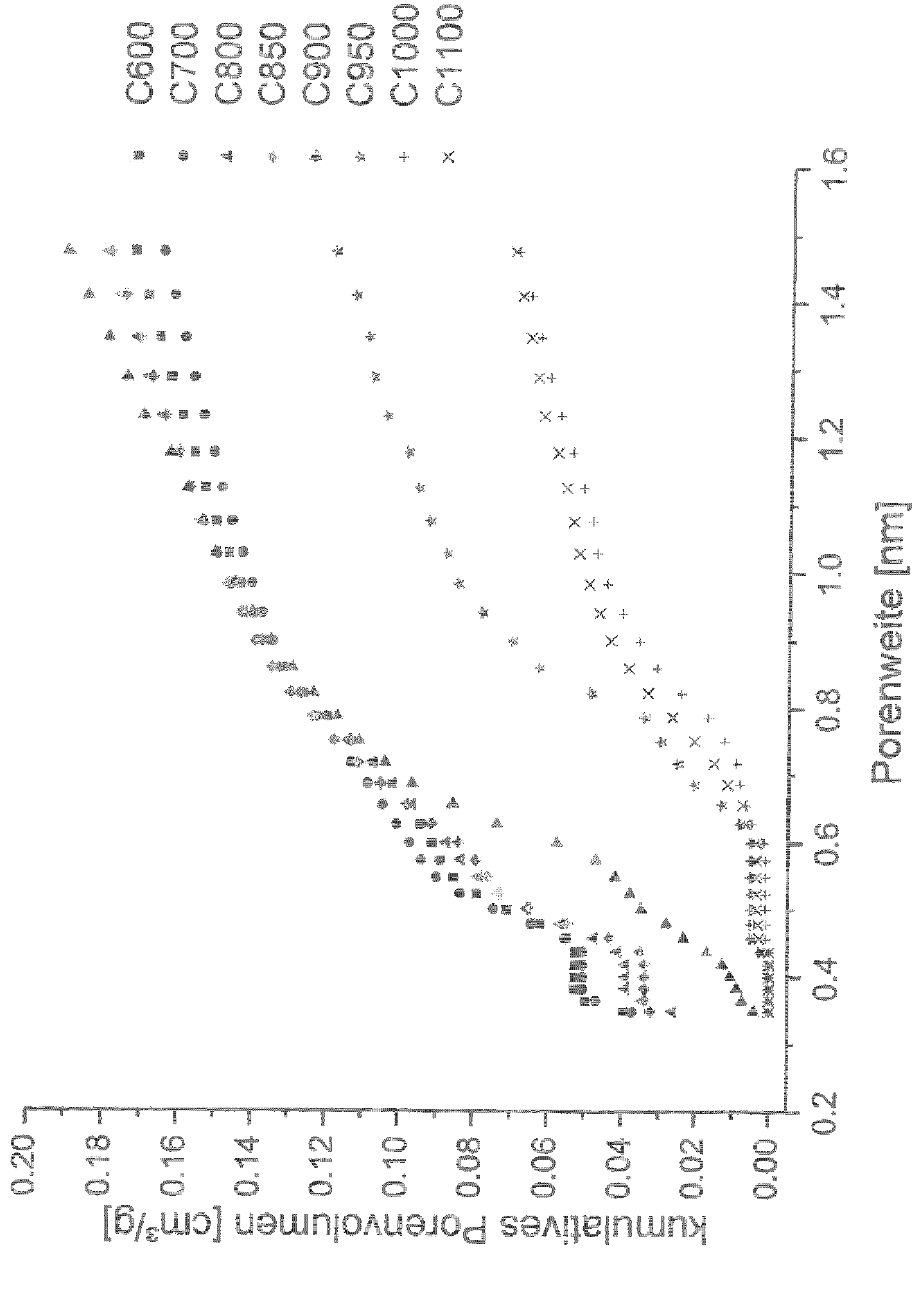
C600
C700
C800
C850
C900
C950
C1000
C1100
Porenweite [nm]
Kumulatives Porenvolumen [cm³/g]
0.2
0.4
0.6
0.8
1.0
1.2
1.4
1.6
0.00
0.02
0.04
0.06
0.08
0.10
0.12
0.14
0.16
0.18
0.20

FIG. 6

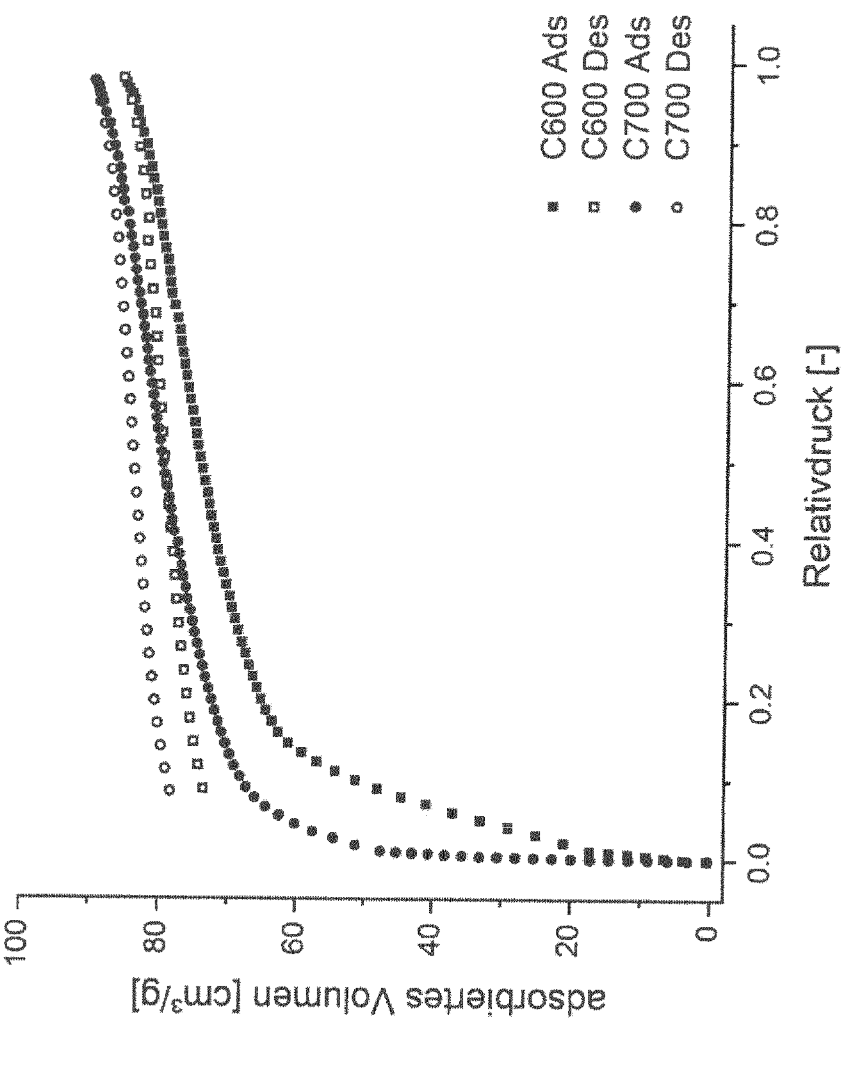
adsorbiertes Volumen [cm³/g]
Relativdruck [-]
C600 Ads
C600 Des
C700 Ads
C700 Des
0
20
40
60
80
100
0.0
0.2
0.4
0.6
0.8
1.0

FIG. 7

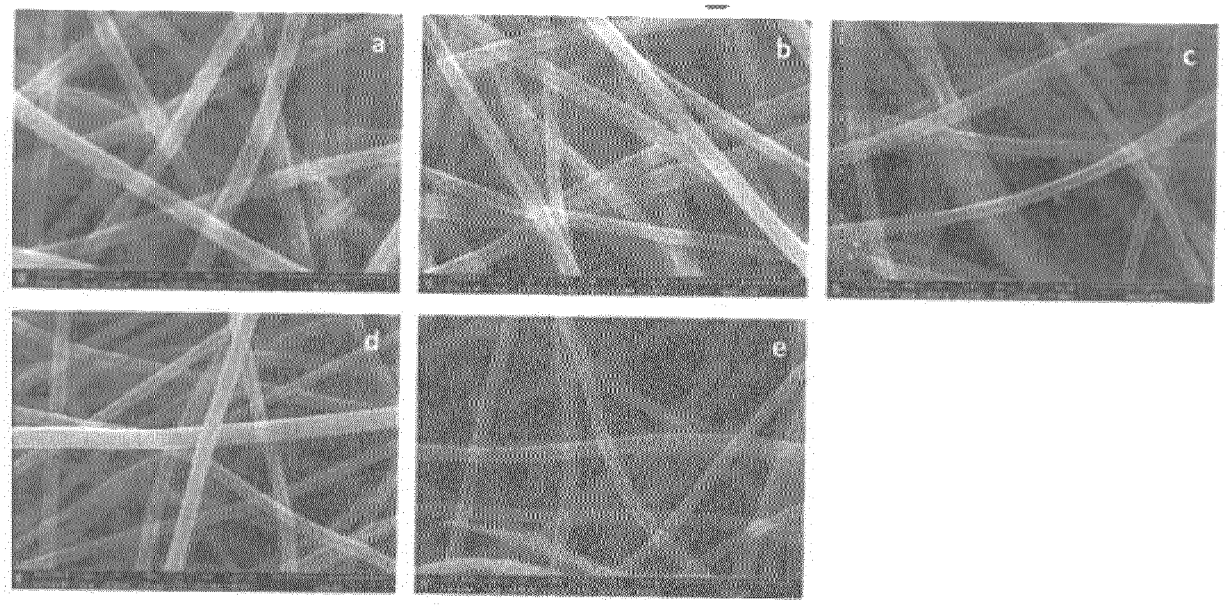

(a) C600, (b) C700, (c) C800, (d) C900, (e) C1000

FIG. 8

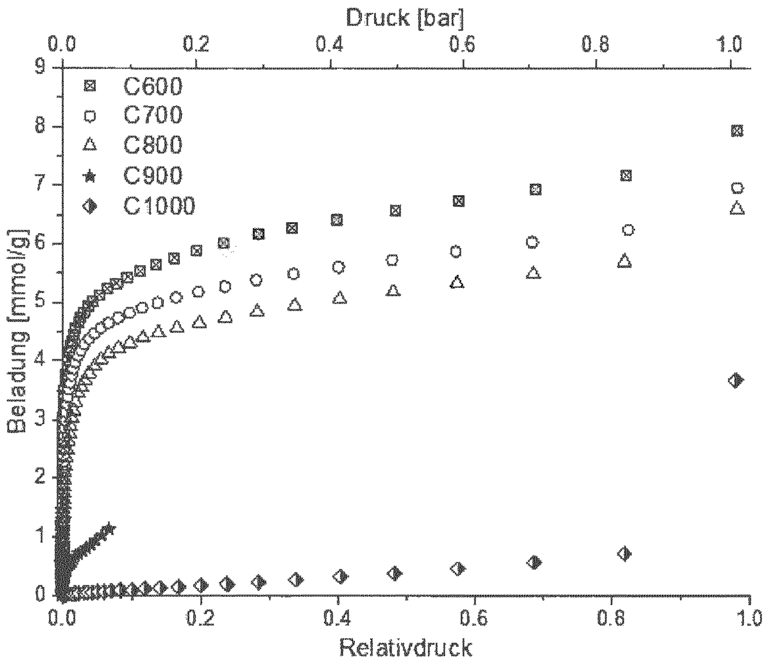

FIG. 9

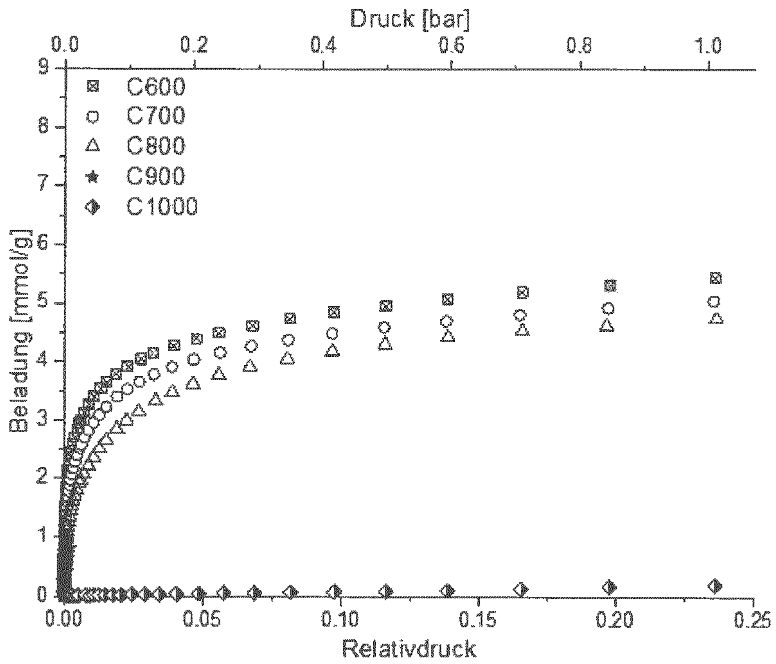
Druck [bar]
0.0
0.2
0.4
0.6
0.8
1.0
C600
C700
C800
C900
C1000
Beladung [mmol/g]
0
1
2
3
4
5
6
7
8
9
0.00
0.05
0.10
0.15
0.20
0.25
Relativdruck

FIG. 10

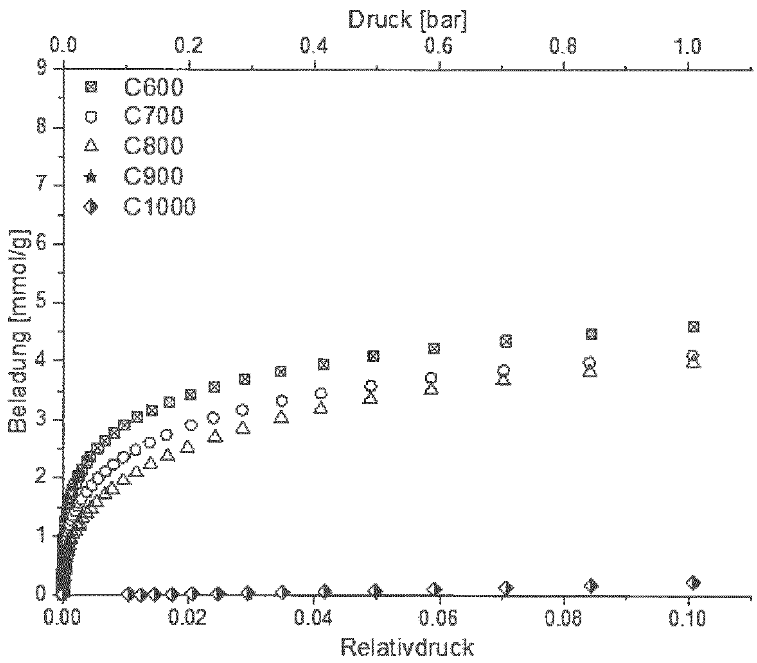
Druck [bar]
0.0
0.2
0.4
0.6
0.8
1.0
C600
C700
C800
C900
C1000
Beladung [mmol/g]
0
1
2
3
4
5
6
7
8
9
0.00
0.02
0.04
0.06
0.08
0.10
Relativdruck

Fig. 11

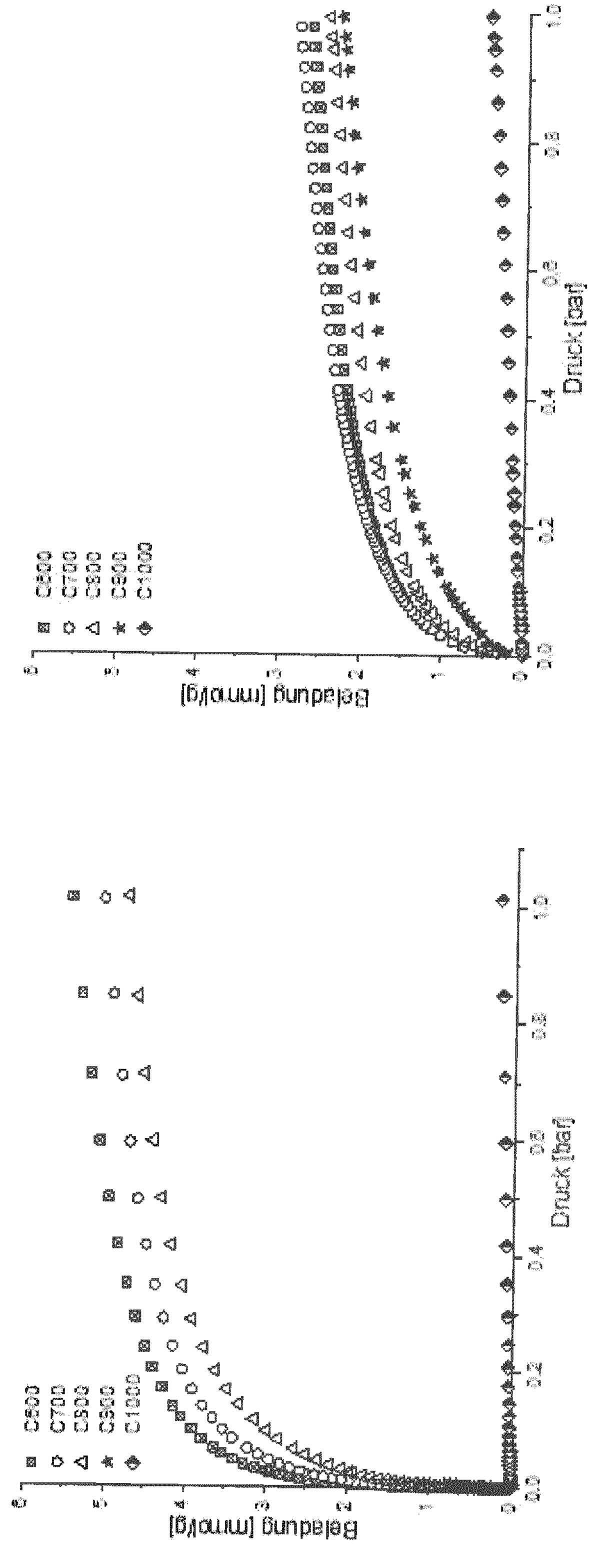
C600
C700
C800
C900
C1000
Beladung [mmol/g]
Druck [bar]
C600
C700
C800
C900
C1000
Beladung [mmol/g]
Druck [bar]

FIG. 12

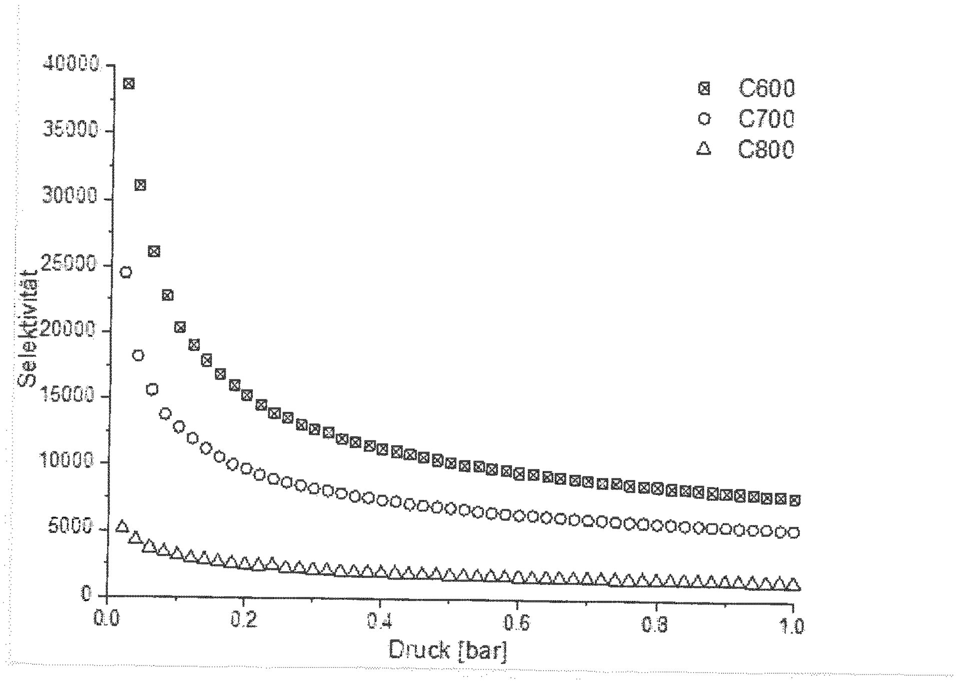
C600
C700
C800
Selektivität
Druck [bar]
0
5000
10000
15000
20000
25000
30000
35000
40000
0.0
0.2
0.4
0.6
0.8
1.0

FIG. 13

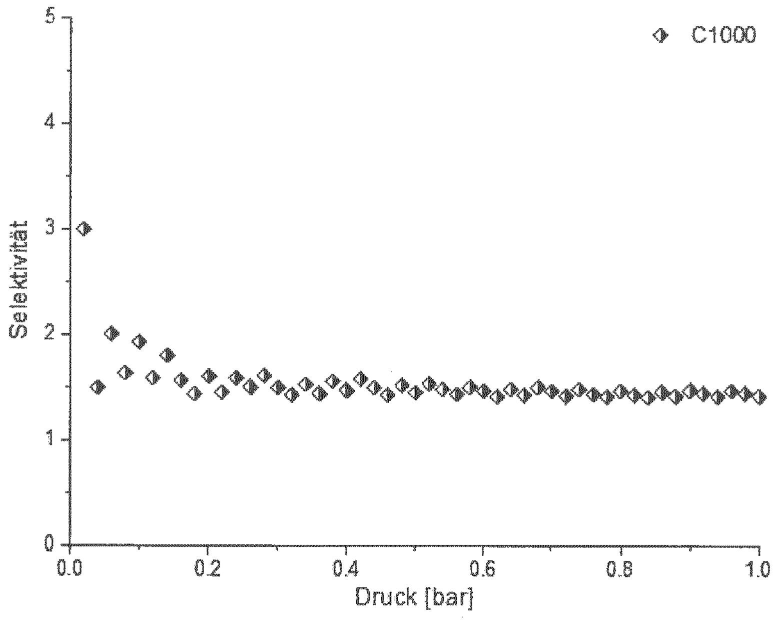
C1000
Selektivität
Druck [bar]
0
1
2
3
4
5
0.0
0.2
0.4
0.6
0.8
1.0

FIG. 14

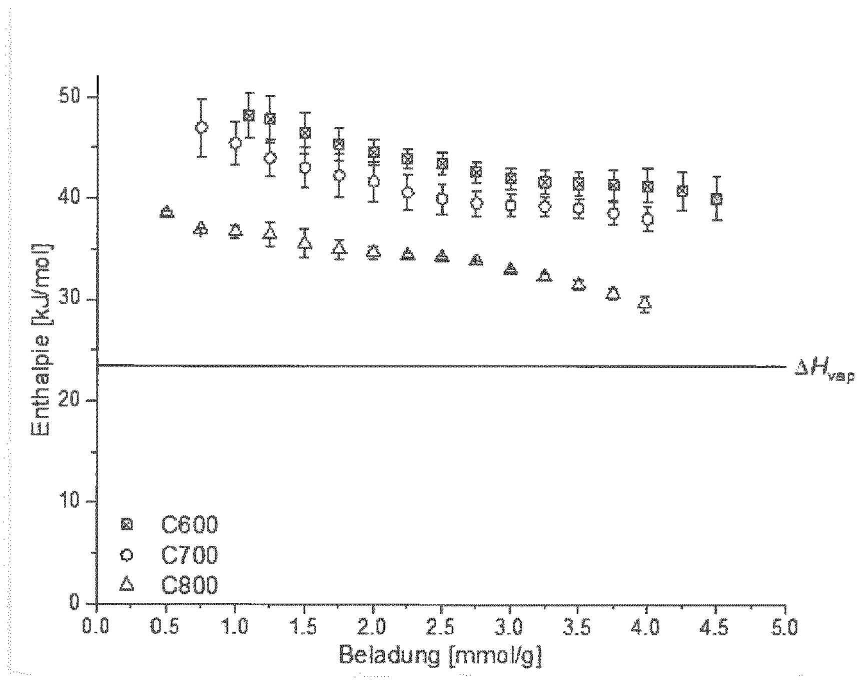
Enthalpie [kJ/mol]
Beladung [mmol/g]
$\Delta H_{vap}$
C600
C700
C800
0
10
20
30
40
50
0.0
0.5
1.0
1.5
2.0
2.5
3.0
3.5
4.0
4.5
5.0

FIG. 15

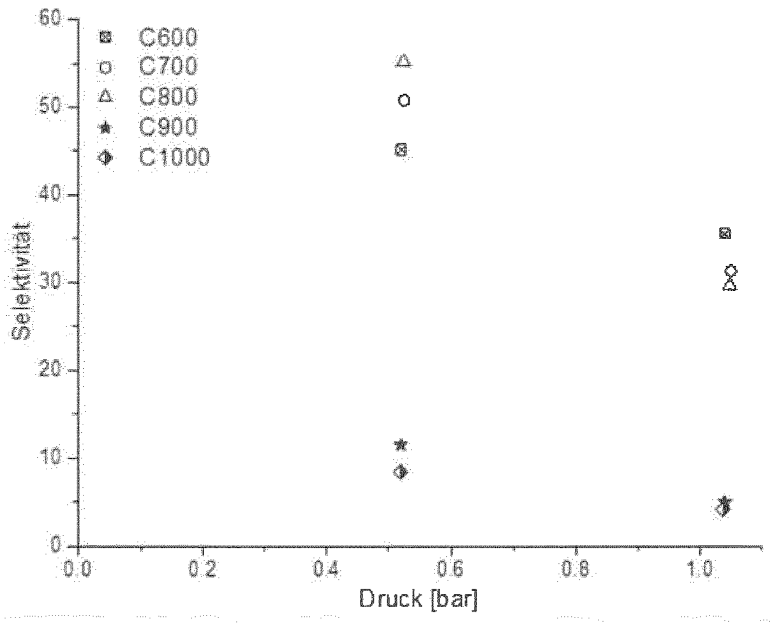
C600
C700
C800
C900
C1000
Selektivität
Druck [bar]
0
10
20
30
40
50
60
0.0
0.2
0.4
0.6
0.8
1.0

Fig. 16

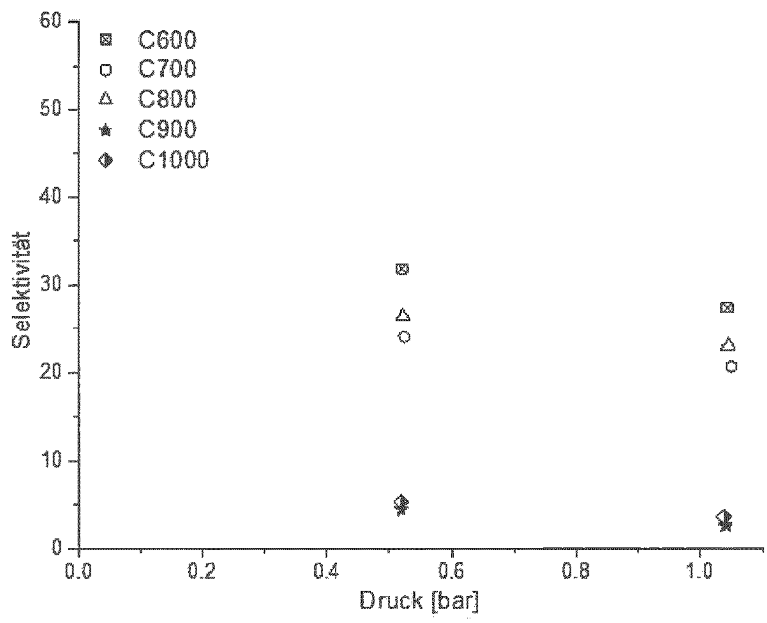
C600
C700
C800
C900
C1000
Selektivität
Druck [bar]
0
10
20
30
40
50
60
0.0
0.2
0.4
0.6
0.8
1.0

Fig. 17

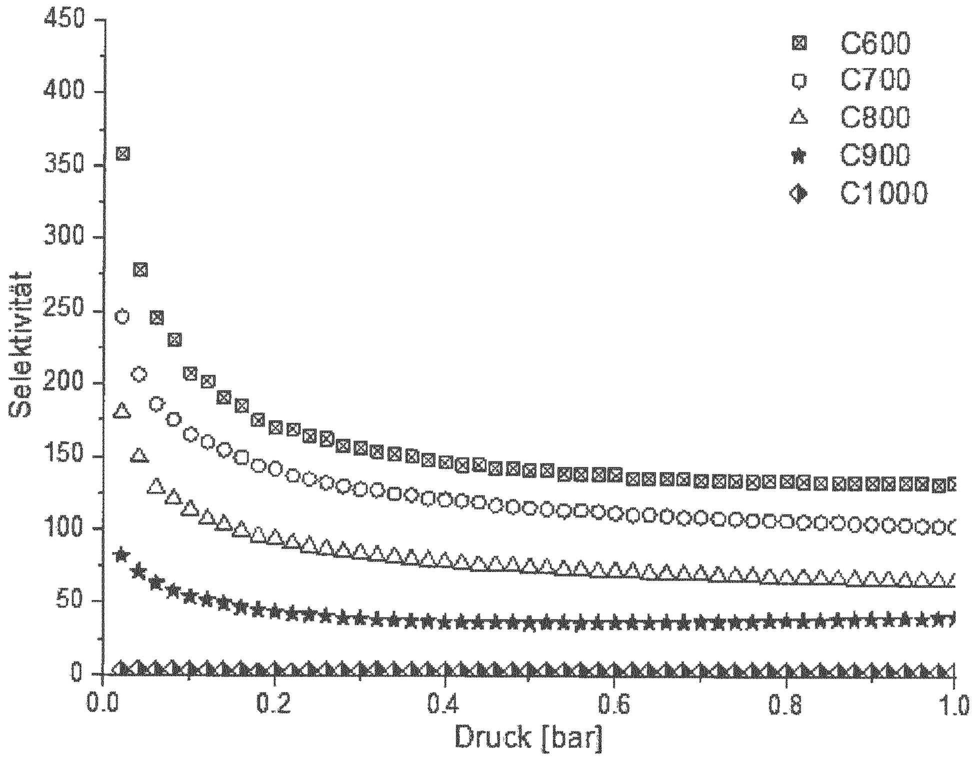
450
400
350
300
250
200
150
100
50
0
0.0
0.2
0.4
0.6
0.8
1.0
Selektivität
Druck [bar]
C600
C700
C800
C900
C1000

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- CN 106362684 A
- CN 106582148 A
- CN 104466168 A
- US 20070048521 A1
- US 20130126794 A1
- US 20160036037 A1
- WO 2019004974 A2
- CN 107051382 A
- US 201600306037 A1
- CN 104511279 A


### In der Beschreibung aufgeführte Nicht-Patentliteratur


- **HSIAO, H.-Y.** ; **HUANG, C.-M.** ; **HSU, M.-Y.** ; **CHEN, H.** Preparation of high-surface-area PAN-based activated carbon by solution-blowing process for CO2 adsorption. *Separation and Purification Technology*, 2011, vol. 82, 19-27
- **HSIAO, A.A.O.** ; **SHEN, W.** ; **ZHANG, S.** ; **HE, Y.** ; **LI, J.** ; **FAN, W.** Hierarchical porous polyacrylonitrile-based activated carbon fibers for CO2 capture. *J. Mater. Chem.*, 2011, vol. 21, 14036
- **LI, L. et al.** Nitrogen-Enriched Porous Polyacrylonitrile-Based Carbon Fibers for CO2 Capture. *Ind. Eng. Chem. Res.*, 2018, vol. 57, 11608-11616
- **KIM, D. W.** ; **JUNG, D. W.** ; **ADELODUN, A. A.** ; **JO, Y. M.** Evaluation of CO2 adsorption capacity of electrospun carbon fibers with thermal and chemical activation. *J. Appl. Polym. Sci.*, 2017, vol. 134, 45534
- **R. SCHIERHOLZ et al.** *RSC Adv.*, 2019, vol. 9, 6267
- **TRAVIS, W.** Dissertation. University College London, 2014
- **NANDI, M. et al.** Unprecedented CO2 uptake over highly porous N-doped activated carbon monoliths prepared by physical activation. *Chemical Communications (Cambridge, England)*, 2012, vol. 48, 10283-10285
- **B. SCHOLES, C.A. et al.** *Recent Patents on Chemical Engineering*, 2008, vol. 1, 52-66
- **D.W.BECK**. Zeolite Molecular Sieves: Structure, Chemistry and Use. Wiley, 1974, 593-724
- **M.E. VAN LEEUWEN**. *Fluid Phase Equilib.*, 1994, vol. 99, 1-18
- **M. GONCALVES et al.** *Environ. Sc. Technol.*, 2011, vol. 45, 10605-10610
- **M. KANEZASHI** ; **A. YAMAMOTO** ; **T. YOSHIOKA** ; **T. TSURU**. *A. I. Ch. E.*, 2010, vol. 56, 1204-1212